# EUROPEAN PATENT SPECIFICATION

(11) **EP 1 311 552 B1**
(45) Date of publication and mention of the grant of the patent: **03.11.2004**
(21) Application number: 01971919.4
(22) Date of filing: 16.08.2001
(51) Int. Cl.: C08F 2/00, B01J 19/00

(54) **PROCEDURE AND DEVICE TO DEVELOP NANODISPERSANTS**
VORRICHTUNG UND VERFAHREN ZUR HERSTELLUNG VON NANODISPERGIERMITTELN
PROCEDE ET DISPOSITIF SERVANT A PREPARER DES NANODISPERSANTS

(30) Priority: 17.08.2000 US 640094
(43) Date of publication of application: 21.05.2003
(73) Proprietor: BASF AKTIENGESELLSCHAFT, 67056 Ludwigshafen (DE); Symyx Technologies, Inc., Santa Clara, CA 95051 (US)
(72) Inventor: SCHROF, Wolfgang, 67271 Neuleiningen (DE); SEUFERT, Michael, 67098 Bad Dürkheim (DE); HEGER, Robert, 69124 Heidelberg (DE); IDEN, Rüdiger, 67373 Dudenhofen (DE); HORN, Dieter, 69120 Heidelberg (DE); KOLTZENBURG, Sebastian, 67125 Dannstadt-Schauernheim (DE); NIELSEN, Ralph, B., San Jose, CA 95129 (US); CARLSON, Eric, Cupertino, CA 95014 (US); CHANG, Han-Ting, Livermore, CA 94550 (US); PETRO, Miroslav, San Jose, CA 95129 (US); KUEBLER, Sigrid, Santa Clara, CA 95051 (US)
(74) Representative: Isenbruck, Günter, Dr.
(86) International application number: PCT/EP2001/009469
(87) International publication number: WO 2002/014377

(56) References cited:
- WO-A-99/52962
- US-A- 5 985 356

## Description

### Field of the invention

The present invention generally relates to an array of nanoparticular dispersion formulations and a method of making said array. The invention can be applied, for example, to search new effective nanodispersants for a stabilization of poorly soluble or insoluble materials in application media, e.g., active ingredients as pharmaceuticals, crop protection agents, vitamins or dye stuffs. Once prepared, these nanoparticular dispersion formulations can be screened in parallel or in a rapid serial screening for stability, for example, by optical methods.

### Background of the invention

Nanoparticular systems are of interest because of very specific advantages, e.g., coloristic, rheological, nonlinear optical properties, bioavailability, etc.

Dispersions of particles are generally obtained in two different ways.

Standard grinding processes starting from solid bulk materials do not typically result in particles with average diameters less than 0,5 µm. Particle size and distribution depends on a variety of parameters like the type of mill or the crushing parts (e.g. silica) used. A further problem is to remove the crushing parts after milling. If smaller grinding fractions are needed, often the smaller crushing parts and grinding dust are left in the product yielding a heterogeneous system.

Because of the larger particle size of milled materials it is more difficult to find additives to stabilize a dispersion of these particles against agglomeration, flocculation, sedimentation and flotation.

An alternative is to start from the molecular solution and to form particles by precipitation. This process faces problems from Ostwald ripening (crystal growth) and/or particle agglomeration again resulting in sedimentation and/or flotation. Generally, the precipitation process is induced in a nucleation stage by changing the compatibility with the surrounding medium (solvent system), e.g., by chemical reaction of the substrate, changing or mixing of solvents, changes in pH value, temperature, pressure, or concentration.

In order to stabilize particular systems, surface-active additives have to be used to inhibit crystal growth and agglomeration in particles of nanometer size. Typical additives are low molecular weight tensides or oligomers yielding so-called solubilisates (micelles) with the drawback of very small content of substrate molecules. Solubilisates show no nucleation process at the beginning of particle formation but a micellar solution process of the substrate by the tenside molecules. Unfortunately, the solvation power of the tensides can induce nucleation and crystal growth because of better transportation of substrate molecules through the solvent medium.

High molecular weight additives are e.g. protective colloids, amphiphilic copolymers, thickeners, etc. Whereas protective colloids stabilize particles against agglomeration by coating the particle surfaces forming a repulsive interaction (steric and/or electrostatic) between particles and inhibit growth by blocking growing sites at the particle surface, thickeners stabilize kinetically by slowing down diffusion and particle collision rates.

In any case, these complex interactions in the colloidal state make it nearly impossible to predict an effective additive to stabilize a given substrate, neither from theoretical calculations nor from formulation experience.

An object of the present invention is therefore to provide an experimental strategy to solve the complex precipitation problem that is individual to particular types of substrates.

### Summary of the invention

The present invention provides an array of n nanoparticular dispersion formulations and a method of making said array, wherein said nanoparticular dispersion formulations each comprise the following components
- at least one nanodispersant,
- at least one application media, and
- one poorly soluble or insoluble material in said application media or a combination of more than one different poorly soluble or insoluble materials in said application media having a single defined ratio between said different poorly soluble or insoluble materials in a single array, typically referred to in the specification and claims as active ingredient;
said method comprising the following steps
c) making said array of n nanoparticular dispersion formulations by
   c1) a parallelized solid solution route, or
   c2) a parallelized general precipitation route, or
   c3) a parallelized reactive precipitation route,
d) parallelized characterizing of said obtained n nanoparticular dispersion formulations,
wherein said active ingredient is the same in each of said n nanoparticular dispersion formulations; and
wherein n ≥ 2.

In a preferred embodiment said method comprises the following steps
a) a method of making an array of m nanodispersants by a parallel polymerization process of at least 2 monomers A and B,
b) characterizing said nanodispersants,
c) making said array of n nanoparticular dispersion formulations, and
d) parallelized characterizing of said obtained n nanoparticular dispersion formulations.

In one embodiment of the present invention the array of n nanoparticular dispersion formulations is made by a parallelized solid solution route. In a second embodiment of the present invention said array of n nanoparticular dispersion formulations is made by a parallelized general precipitation route and in a third embodiment said array is made by a parallelized reactive precipitation route. Using the foregoing method an array of 2 or more different nanoparticular dispersion formulations on a substrate at known locations thereon is obtained,
wherein said nanoparticular dispersion formulations comprise
- at least one nanodispersant,
- at least one application media, and
- an active ingredient.

The present invention uses, in some embodiments, an alloy of nanodispersants, which may be made by a method of making an array of m nanodispersants by a parallel polymerization process comprising the steps
a1) delivering at least 2 monomers A and B, and optionally other components appropriate for the employed polymerization process to each synthesis region on a substrate having k physically separate synthesis regions for m different nanodispersants,
a2) simultaneously reacting said monomers and other useful components to form m different nanodispersants.

Using said method an array of 2 or more different nanodispersants on a substrate at known locations thereon is obtained containing a (co)polymer of at least two monomers A and B.

The present invention also provides an array of 2 or more nandispersants and a method of making an array of m nanodispersants and an array of 2 or more solid solutions and a method of making an array of n solid solutions.

### Detailed description of the invention and preferred embodiment

The present invention provides an array of n nanoparticular dispersion formulations and a method of making said array.

Generally, the array of n nanoparticular dispersion formulations, wherein said nanoparticular dispersion formulations each comprise the following components
- at least one nanodispersant,
- at least one application media, and
- an active ingredient,
wherein said active ingredient is the same in each of said n nanoparticular dispersion formulations; and
is prepared by a method comprising the following steps
c) making said array of n nanoparticular dispersion formulations by
   c1) a parallelized solid solution route, or
   c2) a parallelized general precipitation route, or
   c3) a parallelized reactive precipitation route,
d) parallelized characterizing of said obtained n nanoparticular dispersion formulations,
wherein n is at least 2 and wherein at least one parameter selected from the group consisting of components employed, concentration of the components, temperature, reaction time, pH-value, and solvent, if employed, is different in each of said nanoparticular dispersion formulations.

In a preferred embodiment of the present invention the method of making an array of n nanodispersion formulations comprises the following steps
a) a method of making an array of m nanodipersants by a parallel polymerization process of at least 2 monomers A and B,
c) making said array of n nanoparticular dispersion formulations wherein at least one of said obtained nanodispersants is employed by
   c1) a parallelized solid solution route, or
   c2) a parallelized general precipitation route, or
   c3) a parallelized reactive precipitation route,
d) parallelized characterizing of said obtained n nanoparticular dispersion formulations,
wherein m is at least 2.

In a more preferred embodiment said method comprises the following steps
a) a method of making an array of m nanodipersants by a parallel polymerization process of at least 2 monomers A and B,
b) characterizing said nanodipersants,
c) making said array of n nanoparticular dispersion formulations wherein at least one of said obtained nanodispersants is employed by
   c1) a parallelized solid solution route, or
   c2) a parallelized general precipitation route, or
   c3) a parallelized reactive precipitation route,
d) parallelized characterizing of said obtained n nanoparticular dispersion formulations,
wherein either n and m are independently of each other at least 2.

The complex interactions between a nanodispersant, an active ingredient and an application media in the colloidal state make it impossible to predict an effective nanodispersant for a given active ingredient to stabilize, neither from theoretical calculations nor from formulation experience. The method of the present invention provides an experimental strategy to solve the individual complex colloidal stabilization problem of each formulation given in this disclosure. Applying said new method of the present invention the number of nanodispersants and dispersion formulations synthesized can be increased to more than 1000 a day, whereas the number of nanodispersants and dispersion formulations synthesized by conventional methods of the state of the art is about 2 per person. The probability to find an effective nanodispersant for a given active ingredient is therefore much higher by applying the method of the present invention. By said new method of the present invention new effective nanodispersants and new formulations can be discovered in a short development time.

Additionally, small amounts of the components employed (nanodispersant, active ingredient, etc.) are necessary to prepare said dispersion formulations by the method of the present invention. This is an important factor, especially if the components employed, for example the active ingredient, are expensive or available in limited quantities.

Moreover, the reaction conditions at different reaction regions can be varied in a controlled manner. As such, components employed, concentration of the components, temperature, reaction time, pH-value, and solvent, if employed, etc. can be varied from reaction region to reaction region on the substrate. These advantages are important impacts for commercial success.

### General aspects

The following terms which are used in the specification and techniques which are employed in the parallelized reactions of the present invention have the following general meaning:

### Substrate:

A material having a rigid or semi-rigid surface such as a parallel reactor. In many embodiments, at least one surface of the substrate will be substantially flat, although in some embodiments it may be desirable to physically separate synthesis regions for different materials with, for example, dimples, wells, vials, raised regions, edged trenches, or the like. In some embodiments, the substrate itself contains wells, raised regions, edged trenches, etc., which form all or part of the synthesis regions. Preferably, the synthesis regions on said substrate are wells on a microtiter plate reactor or vials of a parallel reactor, which is especially preferred, if a solvent is used in the process of the present invention.

### Synthesis region:

The synthesis region is a predefined region which is a localized area on a substrate which is, was or is intended to be used for formation of a selected nanoparticular formulation. The synthesis region may have any convenient shape, e.g. linear, circular, rectangular, elliptical, cylindrical, wedge-shaped, etc.

### Array:

Generally, the array of materials is prepared by successively delivering components of materials to predefined synthesis regions on a substrate, and substantially concurrently, reacting the components to form at least two materials.

In the context of this specification the meaning of "reacting" is any kind of interaction between different components for example due to ionic, steric or electrostatic properties of said components or a chemical reaction of individual components or between at least to of them. Said "materials" may be, for example, formulations such as nanoparticular dispersion formulations, solid solutions etc. In one embodiment, for example, a first component of a first material is delivered to a first synthesis region on a substrate, and a first component of a second material is delivered to a second synthesis region on the same substrate. Each component can be delivered in either a uniform or gradient fashion to produce either a single stoichiometry, or alternatively, a large number of stoichiometries within a single synthesis region. The process is repeated, with additional components, to form a vast array of components at predefined, i.e. known locations on the substrate. Thereafter, the components are concurrently reacted to form at least two materials. The components can be sequentially or simultaneously delivered to the synthesis regions on the substrate using any of a number of different delivery techniques.

The array of of dispersion formulations and the array of solid solutions prepared by parallel design and synthetic techniques are obtained on a substrate of the above mentioned general meaning. The embodiment of said substrate may be different depending on the objective.

### Delivery systems

In the delivery systems of the present invention, a small, precisely metered amount of each reactant component is delivered into each reaction region. This may be accomplished using a variety of delivery techniques, either alone or in combination with a variety of masking techniques. Preferred delivery systems of the present invention are dispensers.

### Delivery using a dispenser

Dispensers can be utilized to generate diverse combinations of reactant components in the form of droplets (liquids) or powder on a single substrate.

Commercially available micropipetting apparatus can be adapted to dispense droplet volumes of 5 nanoliters or smaller from a capillary. Such droplets can fit within a reaction region having a diameter of 300 µm or less when a non-wetting mask is employed. In some embodiments, the micropipette is accurately and precisely positioned above the reaction region, as described below, before the reactant solution is deposited.

In a different embodiment, the present invention employs a solution depositing an apparatus that resembles devices commonly employed in the ink-jet printing field. Such ink-jet dispensers include, for example, the pulse pressure type, the bubble-jet type and the slit-jet type. Such ink-jet dispensers which can be used in the present invention are described in WO 96/11878, which is incorporated herein by reference for all purposes.

In another embodiment, aqueous reactant solutions can for example be delivered from a reservoir of the substrate by an electrophoretic pump. In such a device, the thin capillary connects a reservoir of the reactant with a nozzle of the dispenser. A suitable electrophoretic pump is described in WO 96/11878.

Using the aforementioned dispenser systems, the reactants can be delivered to predefined regions on a substrate either sequentially or simultaneously. In a presently preferred embodiment, the reactants are simultaneously delivered to either a single predefined region on the substrate or, alternatively, to multiple predefined regions on the substrate.

### Moving the dispenser with respect to the substrate

To deposit liquids consistently at precisely specified regions using a dispenser, a frame of reference common to the delivery instrument and the substrate is required. In other words, the reference coordinates of the instrument must be accurately mapped onto the reference coordinates of the substrate. Ideally, only two reference points on the substrate are required to completely map the array of reaction regions. The dispenser instrument locates these reference points and then adjusts its internal reference coordinates to provide the necessary mapping. After this the dispenser can move a particular distance in a particular direction and be positioned directly over a known region. Of course, the dispenser instrument must provide precisely repeatable movements. Further, the individual regions of the array must not move with respect to the reference marks on the substrate after the reference marks have been formed. A detailed description of suitable moving techniques for moving the dispenser with respect to the substrate is given in WO 96/11878 which incorporated herein by reference for all purposes.

Further preferred embodiments of the delivery technique of the reactants and the technique for moving the dispenser with respect to the substrate are described later in the specification.

### Dispersion formulations

The present invention relates to a method of making an array of n nanoparticular dispersion formulations, wherein said nanoparticular dispersion formulations each comprise the following components
- at least one nanodispersant,
- at least one application media, and
- an active ingredient;
wherein said active ingredient is the same in each of said n nanoparticular dispersion formulations.

### Nanodispersant

The nanodispersant in the present invention is a compound which is compatible with both, the active ingredient and the application media. Such compounds are preferably water compatible. This means that substantially no macroscopic phase separation is observed, when the nanodispersant is mixed with the active ingredient and the. application media. Such compounds are preferably selected from the group consisting of oligomers and low and high molecular weight polymers with a polymerization degree of more than 2. Said nanodispersants are for example selected from the group consisting of protective colloids, amphiphilic copolymers, and thickeners. Said nanodispersants may be surface-active additives, which are used to inhibit crystal growth and agglomeration in a particle size of nanometers. Whereas protective colloids stabilize particles against agglomeration by coating the particle surfaces forming a repulsive interaction (steric or/and electrostatic) between particles and inhibit growth by blocking growing sites at the particle surface, thickeners stabilize kinetically by slowing down diffusion and particle collision rates. (Co)polymers which can act as nanodispersants are for example random copolymers of vinyl monomers, copolymers with controlled architecture/blocks, condensation polymers, etc.. Preferably said nanodispersants are prepared by polymerization of at least 2 monomers A and B, selected from the group consisting of hydrophobic, neutral hydrophilic, cationic and anionic monomers. Preferably, one of said monomers is a hydrophilic monomer and a second monomer is a hydrophobic monomer.

### Application media

The application media is the media wherein at least one active ingredient is formulated and employed in form of a nanoparticular system. Generally, the active ingredient is poorly soluble or insoluble in said application media. Homogeneous stable nanoparticular dispersion formulations are of interest because of very specific advantages, e.g. coloristic, rheological, bioavailability, nonlinear optical properties, and other properties. The preferred application media of the present invention is an aqueous system, preferably, the aqueous system is pure water or a buffered aqueous solution of pH 2 to 13, more preferably of pH 5 to 9.

### Active ingredient (material of interest) (in the application media poorly soluble or insoluble material)

Such active ingredient (material of interest) in said application media is poorly soluble or insoluble. Said active ingredient includes solids, liquids and gases. Preferably said active ingredient is a low molecular weight active ingredient or a biopolymer (i.e. a polynucleotid or a protein). Active ingredients which are polymers obtained by emulsion polymerization are not within the scope of the present invention. More preferably, said active ingredient is selected from the group consisting of pharmaceuticals, crop protection agents, vitamins, dye stuffs, organic pigments, inorganic pigments, fine chemicals, catalysts, enzymes, fillers, flame retarders, scale inhibitors, cosmetics, UV and light stabilizers.

### Nanoparticular dispersion formulation

System comprising at least one continuous phase (dispersant), which is usually a liquid phase, and at least one dispersed phase. Said dispersed phase (further on called dispersed particles) may be a solid phase, a liquid phase or a gaseous phase (gas bubbles). In the context of the present invention said dispersed phase (dispersed particles) includes both, the active ingredient and the nanodispersant Therefore, said dispersion formulations may be emulsions, aerosols or suspensions. The average particle size, reported in terms of hydrodynamic radius (as explained in detail later in the specification), of the dispersed particles in said nanoparticular dispersion formulations is usually from 10 nm to 5 µm, preferably from 10 nm to 500 nm, more preferably from 20 nm to 50 nm.

The method of the present invention of making an array of n nanoparticular dispersion formulations comprises the following steps:
c) making said array of n nanoparticular dispersion formulations by
   c1) a parallelized solid solution route, or
   c2) a parallelized general precipitation route, or
   c3) a parallelized reactive precipitation route,
d) parallelized characterizing of said obtained n nanoparticular dispersion formulations,
wherein said active ingredient or combination of active ingredients is the same in each of said n nanoparticular dispersion formulations; and
wherein n is at least 2 and whererin at least one parameter selected from the group consisting of components employed, concentration of the components, temperature, reaction time, pH-value, and solvent, if employed, is different in each of said nanoparticular dispersion formulations.

In a preferred embodiment of the present invention the method of making an array of n nanoparticular dispersion formulations comprises the following steps
a) a method of making an array of m nanodipersants by a parallel polymerization process of at least 2 monomers A and B,
c) making said array of n nanoparticular dispersion formulations
   wherein at least one of said obtained nanodispersants is employed by
   c1) a parallelized solid solution route, or
   c2) a parallelized general precipitation route, or
   c3) a parallelized reactive precipitation route,
d) parallelized characterizing of said obtained n nanoparticular dispersion formulations,
wherein either n or m is at least 2.

In a more preferred embodiment said method comprises the following steps
a) a method of making an array of m nanodipersants by a parallel polymerization process of at least 2 monomers A and B,
b) characterizing said nanodipersants,
c) making said array of n nanoparticular dispersion formulations wherein at least one of said obtained nanodispersants is employed by
   c1) a parallelized solid solution route, or
   c2) a parallelized general precipitation route, or
   c3) a parallelized reactive precipitation route,
d) parallelized characterizing of said obtained n nanoparticular dispersion formulations,
wherein either n or m is least 2.

In preferred embodiments of the present invention n and m are, independent of each other, at least 8, more preferably at least 64, most preferably at least 8⁴, and especially n and m are independent of each other at least 8⁶.

The method of the present invention of how to find new nanodispersants (polymeric or oligomeric additives for nanoparticular formulations) can be divided in loops of the steps a) a method of making an array of m nanodispersants by a parallel polymerization process (design and synthesis of copolymer libraries), b) optionally characterizing said nanodispersants, c) making an array of n nanoparticular dispersion formulations (preparation of formulations), d) parallelized characterizing of the obtained nanoparticular dispersion formulations (characterization of nanoparticular stability). Said steps a) to d) are preferably followed subsequently by step e) data mining for lead structures of (co)polymers and structure-property-relationships. With every loop, i.e. from primary to secondary screening, the part of parameter space explored gets smaller and more thoroughly investigated. The number of loops is usually from 1 to 10. Depending on the respective dispersion formulation to be synthesized said number may be higher than 10.

Preferably, prior to step a) (the method of making an array of m nanodispersants) libraries of potentially suitable (co)polymers are designed.

### Library design phase

In one embodiment, this invention provides useful methods for an integrated combinatorial materials science research program for the discovery of novel nanodispersions for a particular active ingredient. Herein, the research program has the goal of creating a nanodispersion using a dispersant that will disperse a desired active ingredient in the desired media (e.g., typically water or a buffered aqueous solution). Thus, the active ingredient is limited to a single species or a single combination of species, in this invention and the work-flow begins with the identification of the desired active ingredient. One or more combinatorial libraries of polymer nanodispersants are then designed for the chosen active ingredient. Existing library design software can be used for this design, such as Library Studio™ (Symyx Technologies, Inc., Santa Clara, CA, USA) as disclosed in PCT/US99/24491 (published as WO 00/23921), which is incorporated herein by reference. The useful monomers for design of the nanodispersant are typically grouped into 4 categories, including hydrophobic, neutral hydrophilic, cationic and anionic. These categories may be further sub-categorized by additional properties, for example, hydrophobic monomers may be sub-categorized into the monomers that provide the ability for π-stacking, large steric structures, etc. As discussed herein, and elsewhere (see e.g., PCT/US00/00418) the monomers for a nanodispersant library are typically prepared by parallel polymerization.

Time is saved because the computer program transfers a recipe file of automated calculated and cross-checked concentrations of ingredients e.g. monomers, initiators, control agents, additives, etc. into an instruction protocol for a robot. The robot fills the individual reaction chambers of parallel reactors (synthesis regions) and controls the polymerization reaction (i.e. reaction time, temperature, etc.).

### Step a) A method of a making an array of m nanodispersants by a parallel polymerization process of at least 2 monomers A and B

Preferably the polymerization process is a standard polymerization reaction in a solvent or in bulk selected from the group consisting of radical polymerization, cationic polymerization, anionic polymerization, polycondensation, polyaddition, polymer analogous reactions, living radical polymerization, homogeneously catalyzed reactions.

Preferably said nanodispersants are prepared by polymerization of 2 to 6 different monomers, more preferably 2 to 5 different monomers and most preferably 2 or 4 different monomers. For example, adding complexity to a nanodispersant may be desirable and this invention allows, for example, starting with three monomers and adding a fourth, etc.

The monomers A and B (and optionally further monomers C, D,...) are preferably selected from the group consisting of hydrophobic, neutral hydrophilic, cationic and anionic monomers. Preferably, one of said monomers is a hydrophobic monomer and a second monomer is one of said monomers selected from the group consisting of hydrophobic, neutral hydrophilic, cationic and anionic monomers. More preferably, one of said monomers is a hydrophobic monomer and a second monomer is a hydrophilic monomer which may comprise acidic or basic groups.

Suitable monomers are for example 1,4-cyclohexane dimethanol divinyl ether, 1,4-cyclohexane dimethanol monovinyl ether, 1-butene, 1-decene, 1-hexene, 1-octene, 1-pentene, 2-methyl-N-vinylimidazole, vinyl 4-tert.-butylbenzoate, acrolein, acrylamide, acrylonitrile, acrylic acid, allyl methacrylate, α-methylstryrene, butadiene, butanediol dimethacrylate, butanediol vinylether, butanediol monoacrylate, butanediol monovinyl ether, butanediol methylmethacrylate, butylacrylate, butylmethacrylate, cyclohexyl vinyl ether, diethyleneglycole divinyl ether, dimethylamino ethylacrylate, dimethylamino ethylacrylate-metochloride, dimethylamino ethylmethacrylate, dimethylamino ethylmethacrylate quaternized by methylchloride, dimethylamino propylmethacrylamide, ethylene, ethyl acrylate, ethyldiglycol acrylate, ethyleneglycol dimethacrylate, ethyleneglycol monovinyl ether, ethylhexylacrylate, ethylmethacrylate, ethylvinyl ether, glycidylmethacrylate, hydroxyethyl methacrylate, hydroxypropyl methacrylate, isobutene, isobutylacrylate, isobutylmethacrylate, isoprene, maleic anhydride, methacrylic acid, methacrylic acid anhydride, methylacrylate, methylenebisacrylic amide, methylmethacrylate, methylvinyl ether, n-butylvinyl ether, N-methyl-N-vinylacetamide, N-vinylcaprolactam, N-vinylimidazol, N-vinylpyrrolidone, octadecyl vinylic ether, phenoxyethylacrylate, propylene, styrene, tert.-butylacrylic amide, tert.-butylacrylate, tert.-butylmethacrylate, triethyleneglycol dimethylacrylate, triethyleneglycol divinyl ether, triethyleneglycol divinylmethyl ether, trimethylol propane trimethacrylate, vinylacetate, vinylchloride, vinylformamide, vinylidenechloride, vinylisobutyl ether, N-vinylpiperidone, vinyl-(2-ethylhexyl) ether, vinylpropyl ether, vinylisopropyl ether, vinyldodecyl ether, vinyl-tert.-butyl ether, hexanediol divinyl ether, hexanediol monovinyl ether, diethyleneglycol monovinyl ether, diethylamino ethylvinyl ether, polytetrahydrofurane-290-divinyl ether, tetraethyleneglycol divinyl ether, ethyleneglycol butylvinyl ether, ethyleneglycol divinyl ether, trimethylolpropane trivinyl ether and aminopropylvinyl ether.

Other components which are optionally employed in the polymerization process are for example initiators, catalysts, starters and modifiers.

In a preferred embodiment of the present invention the polymerization process is a radical polymerization to produce random radical (co)polymers. Preferred monomers A and B (and optionally further monomers C, D, ....) for use in the radical polymerization are non-polar monomers, for example 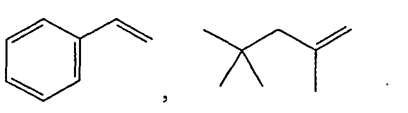 polar monomers comprising acidic groups, for example 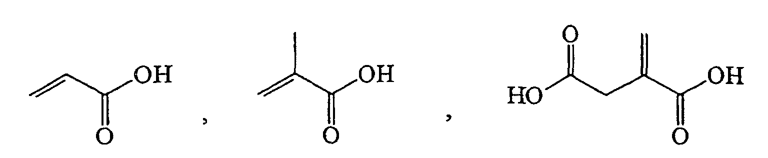 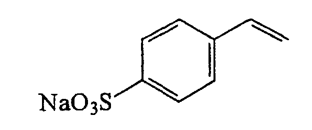 polar monomers comprising neutral groups, for example 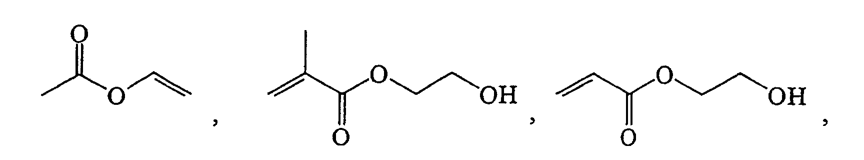 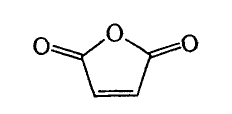 and polar monomers comprising basic groups, for example

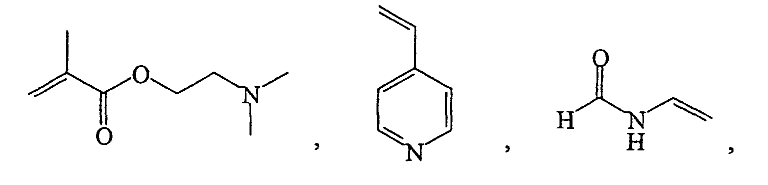

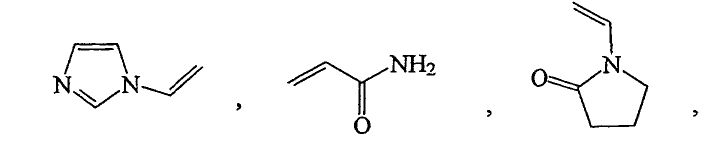

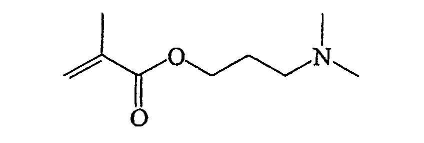

Suitable initiators which may be employed in said radical polymerization are polymerization initiators known in the art, for example hydrogen peroxide, inorganic persulfates, for example sodium peroxodisulfate, potassium peroxodisulfate and ammonium peroxodisulfate, and organic compounds like organic peroxides, peroxyesters, percarbonates and organic azo compounds. Suitable organic peroxides are for example diacetyl peroxide, dibenzyl peroxide, succinyl peroxide, di-tert.-butyl peroxide, tert.-butyl perbenzoate, tert.-butyl pivalate, tert.-butyl permaleinate, cumene hydroperoxide, diisopropyl peroxodicarbamate, bis-(o-toluolyl) peroxide, didecanoyl peroxide, dilauroyl peroxide, tert.-butyl hydroperoxide, tert.-butyl perisobutyrate, tert.-butyl peracetate, di-tert.-amyl peroxide, dibenzoyl peroxide, tert.-butyl perpivalate, tert.-amyl perpivalate, tert.-butyl perneodecanoate and mixtures of said initiators. Suitable azo compounds are for example 2,2'-azo-bis-(2-amindinopropane) dihydrochloride, 2,2'-azo-bis-(N,N'-dimethylene) iso-butyramidine dihydrochloride, 2-(carbamoylazo)isobutyric nitril, 4,4'-azo-bis(4-cyanovaleric acid), 4,4'-dimethyl-2(phenylazo)-valeric nitril, 4-methoxy-2,4-dimethyl-2-(phenylazo)valeric nitril, 1,1'-azo-bis-(cyclohexane-1-carbonitril), 2,2'-azo-bis-(isobutyronitril), 2,2'-azo-bis-(2,4-dimethyl-valeric nitril), 2,2'-azo-bis-[2-(2-imidazoline-2-yl)propane] dihydrochloride, 2,2'-azo-bis-(2-methyl-butyric nitril) and/or 2,2'-azo-bis(isobutyrate).

Said peroxides may be employed in combination with reducing agents, for example Fe(SO₄), Na₂SO₃, NaHSO₃, sodium dithionate, triethanolamin and ascorbic acid. Additionally, the poymerization reaction may initiated by a photo initiator and irradiation with UV-light or by influence of high energy radiation.

If the polymerization reaction is conducted in an aqueous medium, preferably sodium or potassium peroxodisulfate are employed. If the polymerization reaction is conducted in bulk or in an organic solvent, preferably soluble initiators, for example organic peroxides, are employed.

Said initiators are employed in amounts known in the art, for example in amounts of 0.2 to 20 % by weight, preferably 1.0 to 10 % by weight, relating to the amount of monomers employed.

In a preferred embodiment of the present invention step a) is carried out in a solvent which is suitable to dissolve the monomers and the polymer. Preferred solvents are selected from the group consisting of aliphatic carboxylic acids with 1 to 3 carbon atoms, their amides, their mono-C₁-C₄-alkyl amides and di-C₁-C₄ alkyl amides, aliphatic and aromatic chlorohydrocarbons, alcohols of 1 to 5 carbon atoms, for example isopropanol, ketones of 3 to 6 carbon atoms, for example acetone, aromatic hydrocarbons, N-alkylated lactams and mixtures of these.

Because of their good solvent power, preferred solvents are water, methanol, ethanol, isopropanol, formic acid, formamide, dimethylformamide, dimethylpropionamide, N-methylpyrrolidone, methylene chloride, chloroform, 1,2-dichloroethane, chlorobenzene, toluene, xylene, acetone, methylethylketone, methylisopropylketone, methylisobutylketone and mixtures of these.

Preferably, step a) comprises the steps
a1) delivering said at least 2 monomers A and B, preferably a solvent, and optionally useful components appropriate for the employed polymerization process to each synthesis region on a substrate having k physically separate synthesis regions for m different nanodispersants,
a2) subsequently or simultaneously reacting said monomers and optionally other useful components to form m different nanodispersants,
a3) optionally delivering said other components deferred to each synthesis region,
wherein at least one parameter selected from the group consisting of monomers or other components appropriate for the employed polymerization process concentration of said monomers or said useful components, solvent employed, temperature, reaction time is different in each of said m nanodispersions.

I and m are independent of each other at least 2 with the proviso that k is ≥ 2. In a preferred embodiment of the present invention k and m are at least 8, more preferably at least 64, most preferably at least 8⁴, and especially n and m are independent of each other at least 8⁶. It is also possible that the number k of said physically separate synthesis regions on the substrate is larger than the number m of said nanodispersants. This means that not all of the physically separate synthesis regions on the substrate are filled up in order to leave blanks or standards.

Preferably, said physically separate synthesis regions on said substrate are wells on a microtiter plate reactor or vials of a parallel reactor. A parallel reactor which may be used in the present invention is described for example in WO 00/09255, which is incorporated herein by reference.

The volume of said wells or vials is usually at most 100 ml, preferably at most 10 ml, more preferably at most 1 ml and most preferably from 200 to 1000 µl.

Said parallel polymerization to produce said nanodispersants of the present invention provides a method to produce a high number of nanodispersants which can be synthesized in one day. Generally, said parallel polymerization process provides a process for the production of 100 to 100,000, preferably more than 1000 to 100,000, more preferably 10,000 to 100,000 nanodispersants a day. Using for example an array of several microtiter plate reactors of 96 wells of up to 1000 µl volume each, increases the number of nanodispersants synthesized to more than 1000 a day.

Said at least 2 monomers A and B, said solvent and optionally said other components appropriate for the employed polymerization process can be delivered to said synthesis regions on said substrate by a method for delivery of reactant components as mentioned above. Preferably, said at least two monomers A and B, said solvent and said other useful components appropriate for the employed polymerization process are delivered to said synthesis regions on said substrate from a pipette by automated and/or parallel delivering. In another embodiment of the present invention the components are delivered to said synthesis regions on said substrate from an ink-jet dispenser selected from the group consisting of a pulse pressure ink-jet dispenser, a bubble-jet ink-jet dispenser and a slit jet ink-jet dispenser.

The moving of the dispenser with respect to the substrate is realized as mentioned above.

In a preferred embodiment of the present invention the delivering of said at least 2 monomers A and B, optionally a solvent and optionally other components appropriate for the employed polymerization process to each synthesis region on a substrate having k physically separate synthesis regions for m different nanodispersants (step a1) comprises the following steps:
a11) identifying a reference point on said substrate,
a12) moving a dispenser of said at least 2 monomers A and B, optionally said solvent or optionally said other useful components appropriate for the employed polymerization process a fixed distance and direction from said reference point such that said dispenser is positioned approximately above a first synthesis region on said substrate,
a13) delivering one of said at least 2 monomers A and B, optionally said solvent or optionally said other components to said first synthesis region, and
a14) repeating steps a12) and a 13) for each remaining component consisting of said at least 2 monomers A and B, optionally said solvent and optionally said other components,
wherein k and m are independent of each other at least 2 with the proviso that k ≥ 2.

The array of polymer dispersants can be cleaned, washed or otherwise treated as those of skill in the art are aware. The array of polymer dispersants may be used one or more times to form a nanodispersion array or library using the different routes as discussed herein.

### Step b) Optionally characterizing said nanodispersants

The nanodispersants in the array can be screened to determine if the desired material was prepared (for example through testing a random selection of the nanodispersants or "spot" testing or more complete testing) in a manner known in the art, such as using rapid chromatography techniques (see, e.g., PCT/US99/07304).

The nanodispersants in the array can be screened for example by extended GPC (gel permeation chromatography), accelerated GPC, rapid GPC, rapid gradient HPLC (high pressure liquid chromatography), flow injection analysis or NMR (nuclear magnetic resonance spectroscopy), GC (gas chromatography) or IR (infrared spectroscopy).

In a preferred embodiment of the present invention the nanodispersants obtained are characterized for molecular weight (Mw) and monomer conversion by rapid GPC.

Said characterization of the nanodispersants in step b) is useful to optimize the conditions of the synthesis of said nanodispersants prior to the screening process. It is also very useful to characterize the most promising leads and hits identified by the screening process.

### Step c) Method of making an array of n nanoparticular dispersion formulations, by

c1) a parallelized solid solution route, or
c2) a parallelized general precipitation route, or
c3) a parallelized reactive precipitation route.

### c1) Parallelized solid solution route

In a first step, a solution of at least one of said nanodispersants and a solution of one active ingredient or a combination of more than one active ingredients are mixed in the same or in compatible solvents in similar parallel geometries, i.e. microtiter plates. The mixing process can be assisted by moderate stirring or vortexing. In a second step, the solvent will be evaporated e.g. by vacuum under simultaneous IR irradiation. The molecular disperse solid solution formed by this process can be analyzed by X-ray diffraction (missing Bragg peaks), DSC (differential scanning calorimetry) or optical transmission. In a third step, the redispersion process is triggered by adding a non-solvent of the active ingredient, e.g. water, also potentially assisted by moderate stirring, vortexing or ultrasonic treatment A nanoparticular formulation is made by this redispersion process in a successful case.

In a preferred embodiment of the present invention the parallelized solid solution route of step c1) comprises the following steps:
c11) delivering a solution of at least one of said nanodispersants and a solution of an active ingredient to each synthesis region on a substrate having k physically separate synthesis regions,
c12) forming n solid solutions of said at least one nanodispersant and said active ingredient,
c13) dispensing said at least one application media into said k physically separate synthesis regions on said substrate, and optionally
c14) agitating the obtained mixture to form n different nanoparticular dispersion formulations,
wherein k and n are independent of each other at least 2 with the proviso that k ≥ 2.

Said nanodispersants as well as said active ingredient may be delivered to each synthesis region for example in form of their solutions, suspensions, emulsions, dispersions or in bulk or gaseous form, depending on their physical properties.

The solvents to dissolve said at least one nanodispersant and said active ingredient are depending on the nature of the active ingredient and the nanodispersant. Suitable solvents are for example selected from the group consisting of aliphatic carboxylic acids with 1 to 3 carbon atoms, their amides, their mono-C₁-C₄-alkyl amides and di-C₁-C₄ alkyl amides, aliphatic and aromatic chlorohydrocarbons, alcohols of 1 to 5 carbon atoms, for example isopropanol, ketones of 3 to 6 carbon atoms, for example acetone, aromatic hydrocarbons, N-alkylated lactams and mixtures of these. Because of their good solvent power, preferred solvents are methanol, ethanol, isopropanol, formic acid, formamide, dimethylformamide, dimethylpropionamide, N-methylpyrrolidone, methylene chloride, chloroform, 1,2-dichloroethane, chlorobenzene, toluene, xylene, acetone, methylethylketone, methylisopropylketone, methylisobutylketone and mixtures of these.

The solid solutions are formed by evaporating the solvent e.g. by a vacuum under simultaneous IR irradiation. Preferably, said solid solutions are formed by spray drying, vacuum drying or lyophilization or other drying techniques, for example by circulating warm dry air across the samples at ambient pressure.

The step of delivering at least one of said nanodispersants and said active ingredient (c11) to the synthesis regions on the substrate can be realized as mentioned above. In a preferred embodiment of the present invention said step of delivering said components comprises the following steps:
c111 ) identifying a reference point on said substrate,
c112) moving a dispenser of said at least one nanodispersant and said active ingredient a fixed distance and direction from said reference point such that said dispenser is positioned approximately above a first synthesis region on said substrate,
c113) delivering one of said at least one nanodispersants or said active ingredient to said first synthesis region, and
c114) repeating steps c112) and c113) for the remaining component(s) consisting of said at least one nanodispersant and said active ingredient.

The at least one nanodispersant and the active ingredient can be delivered to each synthesis region on said substrate by a method for delivery of reactant components as mentioned above. Preferably, said at least one nanodispersant and said active ingredient are delivered to said synthesis regions on said substrate from a pipette by automated and/or parallel delivering. In another embodiment of the present invention said components are delivered by an ink-jet dispenser selected from the group consisting of a pulse pressure ink-jet dispenser, a bubble-jet ink-jet dispenser and a slit jet ink-jet dispenser.

### c2) Parallelized general precipitation route

The solution of the at least one nanodispersant in the application media and the active ingredient are mixed in a way that for the resulting mixture of solvents the saturation concentration of the active ingredient will be exceeded. This ends up in a spontaneous formation of nanoparticular structures. In this process the state of aggregation of the active ingredient will be changed, not its chemical identity. This can be achieved by two chemically different solvents or with the same solvent by changing e.g. pH value, ionic strength or temperature. The process conditions can vary in this parallel precipitation, e.g. droplet dispensing or injection of the solution of the at least one active ingredient with a parallel robot to the solution of the at least one nanodispersant or a mixing chamber with defined flow rates and contact times between the solutions of the at least one nanodispersant and the active ingredient.

In a preferred embodiment of the present invention the parallelized general precipitation route of step c2) comprises the following step
c21) delivering a first solution of at least one of said application media and a second solution of said active ingredient with said first and/or second solution additionally comprising said at least one nanodispersant, to each synthesis region on a substrate having k physically separate synthesis regions,
wherein said solvents and said solutions are miscible and chosen in a way that for the resulting mixture of said solvents the saturation concentration of said active ingredient will be exceeded to form n different nanoparticular dispersion formulations.

The solvents are depending of the nature of the active ingredient and the nanodispersant Suitable solvents are the same as mentioned under c1).

Preferably, said physically separate synthesis regions on said substrate are wells on a microtiter plate reactor or vials of a parallel reactor.

Suitable methods for delivery of reactant components are already mentioned above. Preferred methods for the delivery of reactant components are the same methods as mentioned under c1).

Suitable methods for moving the dispenser with respect to the substrate are mentioned above. In a preferred embodiment of the present invention the step of delivering a solution of at least one of said nanodispersants and a solution of said active ingredient (c21) each comprises the following steps:
c211) identifying a reference point on said substrate,
c212) moving a dispenser of said solution of said at least one nanodispersant and said solution of said active ingredient a fixed distance and direction from said reference point such that said dispenser is positioned approximately above a first synthesis region on said substrate,
c213) delivering one of said solution of said at least one nanodispersant or said solution of said active ingredient to said first synthesis region, and
c214) repeating steps c212) and c213) for the remaining component(s) consisting of said solution of said at least one nanodispersant and said solution of said active ingredient.

### c3) Parallelized reactive precipitation route

Reactive precursors of the active ingredient can be stabilized by at least one nanodispersant in a way that the reaction resulting in the final substrate occurs in nanoparticles of a nanoparticular dispersion formulation. Alternatively, first the reaction of one or more precursors of the active ingredient producing the final active ingredient is finished and afterwards the at least one nanodispersant stabilizes the substrate in form of nanoparticles of a nanoparticular dispersion formulation. Process conditions are similar as described in c2). Reactions can be chemical reactions, salt formations, or complexations. Active ingredients which are polymers obtained by emulsion polymerization are not within the scope of the present invention. In a preferred embodiment, c3), the parallelized reactive precipitation route (c3) comprises the following steps
c31) delivering a solution of one or more reactive precursors of said active ingredient and a solution of said at least one nanodispersant in the application media to each synthesis region on a substrate having k physically separate synthesis regions,
c32) reacting said one or more precursors to produce said active ingredient which is stabilized by said at least one nanodispersant to form n different nanoparticular dispersion formulations,
wherein k and n are independent of each other at least 2 with the proviso that k ≥ n.

If more than one reactive precursor for the active ingredient is employed, the nanodispersant and the reactive precursors may be delivered to each synthesis region in any order. Suitable reactive precursors are for example CaCl₂ + Na₂CO₃, BaCl₂ + Na₂SO₄, TiCl₄ + NaOH and CaCl₂ + Na₂C₂O₄. Active ingredients which are polymers obtained by emulsion polymerization are not within the scope of the present invention.

Preferably, said physically separate synthesis regions on said substrate are wells on a microtiter plate reactor or vials of a parallel reactor.

The at least one nanodispersant and the precursor of said active ingredient are delivered to the synthesis regions on the substrate by methods for delivery of reactant components as mentioned above. Preferred methods for the delivery of reactant components are the same methods as mentioned under c1).

The solvents employed are depending of the nature of the active ingredient and the nanodispersant Suitable solvents are the same as mentioned under c1).

The components are deposited to each synthesis region on a substrate having k physically separate synthesis regions by moving the dispenser with respect to the substrate as mentioned above. Preferably, the step of delivering a solution of a reactive precursor of said active ingredient and a solution of said at least one nanodispersant each comprises the following steps
c311) identifying a reference point on said substrate,
c312) moving a dispenser of said solution of a reactive precursor of said active ingredient and said solution of said at least one nanodispersant a fixed distance and direction from said reference point such that said dispenser is positioned approximately above a first synthesis region on said substrate,
c313) delivering one of said solution of a reactive precursor of said active ingredient or said solution of said at least one nanodispersant to said first synthesis region, and
c314) repeating steps c312) and c313) for the remaining component(s) consisting of said solution of a reactive precursor of said active ingredient and said solution of said at least one nanodispersant.

Said parallel preparation to produce said nanoparticular dispersion formulations of the present invention provides a method to produce a high number of nanoparticular dispersion formulations which can be synthesized in one day. Generally, said parallel preparation process provides a process for the production of 100 to 100,000, preferably more than 1000 to 100,000, more preferably 10,000 to 100,000 of nanoparticular dispersion formulations a day.

### d) Parallelized characterizing of said obtained n nanoparticular dispersion formulations

Generally, this invention utilizes a method for screening the results of the formulation work described above. The general route is particularly important in combinatorial materials science where an object is to form vast arrays of different formulations for testing in different applications so that a combinatorial materials science program for nanodispersion formulation can be effectively implemented using the methods of this invention. For example, initially a large compositional space for the nanodispersants may be rapidly explored through the preparation of compositional gradients within a binary (A,B) or ternary composition space of monomers (A, B, and C) or composition spaces of orders higher than 3. Such a composition space may be studied through the creation of a matrix of ratios containing 0-100% for each monomer. After a first array is prepared and screened, a focused second array limited to a compositional range of interest may be examined with a finer gradient. This process can continue as long as the screening can meaningfully distinguish between neighboring array elements.

In one embodiment, this invention provides useful methods for an integrated combinatorial materials science research program for the discovery of novel nanodispersions for a particular active ingredient. Herein, the research program has the goal of creating a nanodispersion using a dispersant that will disperse a desired active ingredient in the desired media (e.g., typically water or a buffered aqueous solution). The work-flow begins with the identification of the desired active ingredient. One or more combinatorial arrays of polymer nanodispersants are then designed for the chosen active ingredient. Existing library design software can be used for this design, such as Library Studio^{TM} (Symyx Technologies, Inc., Santa Clara, CA, USA) as disclosed in PCT/US99/24491 (published as WO 00/23921), which is incorporated herein by reference.

The useful monomers for design of the nanodispersant are typically grouped into 4 categories, including hydrophobic, neutral hydrophilic, cationic and anionic. These categories may be further sub-categorized by additional properties, for example, hydrophobic monomers may be sub-categorized into the monomers that provide the ability for π-stacking, large steric structures, etc. As discussed herein, and elsewhere (see e.g., PCT/US00/00418) the monomers for a nanodispersant array are typically prepared by parallel polymerization. The nanodispersants in the array can be screened to determine if the desired material was prepared (for example through testing a random selection of the nanodispersants or "spot" testing or more complete testing) in a manner known in the art, such as using rapid chromatography techniques (see, e.g., PCT/US99/07304). The array of polymer dispersants may be used one or more times to form a nanodispersion array using the different routes as discussed herein. In some embodiments, the quantity of dispersant is large enough to be used for several preparations of nanodispersant arrays, for example, through daughtering the dispersant array into or onto several substrates (such as microtiter plates having wells). The preparation of the arrays or libraries of nanodispersions proceeds through one of the routes discussed in detail above, including the solid solution route, the general precipitation route and the reactive precipitation route.

Afterwards, the arrays of nanodispersions are "screened" for a property of interest. As used herein, a "screen" is a test performed on one or more members of a library of materials to determine if a property or compound of interest is present. A screen may be simple and provide only minimal information or data or may be more complex and provide complex information or data. Generally, screening is divided up into levels depending on the type and amount of information that is provided. The first level is a primary screen, which is the fastest or highest throughput screening level. A primary screen, because of the need for fast rates, should be able to screen arrays at a pace that accommodates the method of array preparation. In other words, the primary screen should be able to screen in a day the nanodispersion arrays that are formulated in a day, with the formulation rate begin adjusted to accommodate screening and/or vice versa. In the context of this invention, a primary screen will test and determine at least one property or compound in the members of the array. A primary screen here will typically be either a parallel visual screen, parallel optical screen or high throughput chromatography, which parallel visual or optical screening being preferred.

The next level is secondary screening, which is testing to provide more information on array members that pass the primary screen. In some embodiments, secondary screening will require preparation of larger quantities of the nanodispersions that pass the primary screen and in other embodiments, the secondary screen will be performed on arrays that have been created from those members of arrays that have passed the primary screen (e.g., an array constructed only of members from previous libraries). Since secondary screening typically is performed on fewer samples than primary screening, the secondary screen may typically take longer than the primary screen and provides additional data. Thus, the secondary screen can be chosen from the same list of screens discussed herein, but may also include a stability test, melting point tests (e.g., such as differential scanning calorimetry), pH testing, chromatography (e.g., size exclusion chromatography), spectroscopy (e.g., UV-VIS absorption), dynamic light scattering for measuring the average particle size, for example FOQELS and FODLS (Fiber Optic Dynamic Light Scattering) or another test to determine composition of matter or another test as is known to those of skill in the nanodispersion art.

For example, stability screening can be performed by observing the stability of the nanodispersion array member(s) at a first time and possibly a second time and determining any change in nanodispersion stability. Typically, stability is determined by testing the size of the dispersed phase (e.g., by light scattering) or the composition of the nanodispersion (e.g., by chromatography) or visually to observe whether a nanodispersion has formed. The first time will be near to time of nanodispersion formation and can range from 2 minutes to as much as 48 hours, with less than 24 hours being preferred. Stability at a first time may be a typical primary screen, e.g., it determines if a nanodispersion has formed at all. The second time for stability determination can be at about 24 hours from the time of nanodispersion formation to as much as 1, 2, 3 or 4 weeks from the time of formation. This provides longer term stability testing. Another option is aging of the nanodispersions between two or more stability tests. Aging of the nanodispersions can be accomplished through thermocycling, shearing, shaking or stirring the formulations. Thermocycling is preferred, with the temperature for cycling varying from room temperature to up to 75°C, and preferably at least about 40°C.

After primary and secondary screening, focussed arrays from within the compositional regions shown to have the most desirable results from the screening are prepared. In addition, bulk samples of identical compositions were prepared according to conventional methods for the purpose of scale-up, structural and/or composition comparisons. Thus, it can be seen how those of skill in this art can effectively utilize the methods of this invention for a combinatorial materials science research program.

### e) Data-mining for lead structures

Preferably, subsequent to the steps a) to d) for the preparation and characterization of an array of nanoparticular dispersion formulations a data-mining for lead structures of nanodispersants and formulation-processing-property-relationships is carried out. Starting from lots of recipes, preparation conditions, and stabilization characterization of such formulation-processing-property-relationships can be generated by numerical procedures, e.g. fuzzy logic or neuronal networks. This allows a higher level screening (next loop) in a promising region of the parameter space, e.g., a more detailed investigation of a ternary composition diagram of monomers using smaller steps in the variation of monomer composition or a slight variation of the preparation conditions, i.e. temperature of injection. This higher level screening loops can be refined, as long the stabilization properties will become better.

The average particle size, reported in terms of hydrodynamic radius, of the dispersed particles in said nanoparticular dispersion formulations is usually from 10 nm to 5 µm, preferably from 10 to 500 nm, more preferably from 20 to 50 nm. The average particle sizes were characterized by light scattering methods, preferably Fiber Optic DLS measurements (FODLS). Therefore, samples of said dispersion formulations were diluted to approximately 0.005% solids in an appropriate carrier aqueous solution. Average particle sizes were determined by second order cumulant analysis and are reported in terms of hydrodynamic radius (r_{H}).

Another embodiment of the present invention is an array of at least 8 different nanoparticular dispersion formulations on a substrate at known locations thereon, with said nanoparticular dispersion formulations containing
- at least one nanodispersant,
- at least one application media, and
- an active ingredient
wherein said active ingredient is the same in each of said nanoparticular dispersion formulations .

Said at least one nanodispersant, at least one application media and said active ingredient are already defined above. Preferably, the array has at least 48, more preferably at least 64, most preferably at least 8⁴ different nanoparticular dispersion formulations.

Said nanoparticular dispersion formulations are of interest because of their very specific advantages, e.g. coloristic, rheological, bioavailability, non-linear optical properties or other properties.

Another embodiment of the present invention is a method of making an array of m nanodispersants by a parallel polymerization process comprising the steps
- delivering at least 2 monomers A and B, optionally a solvent and optionally other components appropriate for the employed polymerization process, e.g. initiators, catalysts, starters, modifiers to each synthesis region on a substrate having k physically separate synthesis regions for m different nanodispersants,
- subsequently or simultaneously reacting said monomers or other useful components to form m different nanodispersants,
wherein at least one parameter selected from the group consisting of monomers or other components appropiate for the employed polymerization process, concentration of said monomers or said other useful components, solvent employed, temperature reaction time is different in each of said m nanodispersants and k and m are independent of each other least 2 with the proviso that k ≥ m.

The monomers, solvent, other components appropriate for the employed polymerization process and the polymerization process are already mentioned above.

Said nanodispersants can be employed in a method of making an array of n nanoparticular dispersion formulations comprising the steps c) and d) of the method of making an array of n nanoparticular dispersion formulations as mentioned above.

By said method of making an array of nanodispersants, new effective nanodispersants can be discovered in a short development time.

This method provides an array of at least 8 different nanodispersants on a substrate at known locations thereon, wherein said nanodispersants are synthesized by polymerization of at least 2 monomers A and B, wherein one of said monomers is a hydophilic monomer and the other monomer is a hydrophobic monomer.

Suitable monomers and polymerization processes are already mentioned above under a).

Another embodiment of the present invention is a method of making an array of n solid solutions by a parallelized solid solution route comprising the following steps
- delivering at least one of said nanodipersants as mentioned above and a solution of an active ingredient to each synthesis region on a substrate having k physically separate synthesis regions;
- forming n solid solutions of said at least one nanodipersant and said active ingredient,
wherein said active ingredient is the same in each of said n solid solutions, and
wherein k and n are independent of each other at least 2 with the proviso that k ≥ 2.

The steps of delivering the components to said synthesis regions on said substrate and for forming said solid solutions are already mentioned above.

Said method of making an array of solid solutions provides an array of at least 8 different solid solutions on a substrate at known locations thereon, wherein said solid solutions containing
- at least one nanodispersant, and
- an active ingredient,
wherein said active ingredient is the same in each of said solid solutions.

Said at least one nanodispersant and said active ingredient are already mentioned above.

The present invention provides a method for discovering new effective nanodispersants and new dispersion formulations in a very short time.

### Examples

### 1. Random radical (co)polymers

Two embodiments of the (co)polymer dispersing agents (nanodispersants) are shown below (libraries 1 and 2).

Library 1 is a (co)polymer library comprising styrene (S) / acrylic acid (AA) / dimethylaminoethylmethacrylate (DMAEM). The composition parameter space includes up to 100% of each monomer. It was designed to have the following compositional makeup:

| *Library 1: composition (S*/*AA*/*DMAEM [mol% offeedJ)* | | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| A | 95/05/00 | 90/09/01 | 70/26/04 | 80/15/05 | 85/10/05 | 100/0/0 | 90/05/05 | 85/05/10 | 80/05/15 | 70/05/25 | 90/00/10 | 95/00/05 |
| B | 80/20/00 | 75/24/01 | 50/43/07 | 60/30/10 | 70/19/11 | 75/14/11 | 60/18/22 | 70/11/19 | 60/10/30 | 50/08/42 | 75/01/24 | 80/00/20 |
| C | 65/35/00 | 60/38/02 | 35/55/10 | 40/45/15 | 50/32/18 | 55/25/20 | 45/25/30 | 50/18/32 | 40/15/45 | 35/10/55 | 60/02/38 | 65/00/35 |
| D | 50/50/00 | 45/52/03 | 25/64 /11 | 30/53/18 | 35/42/23 | 40/33/27 | 30/31/38 | 35/23/42 | 30/17/53 | 25/11/64 | 45/03/52 | 50/00/50 |
| E | 35/65/00 | 30/67/03 | 15/72/13 | 20/60/20 | 25/49/26 | 25/41/34 | 20/36/44 | 25/26/49 | 20/20/60 | 15/13/72 | 30/03/67 | 35/00/65 |
| F | 20/80/00 | 15/81/04 | 10/77/13 | 10/68/22 | 15/55/30 | 15/47/38 | 10/40/50 | 15/30/55 | 10/22/68 | 10/14/76 | 15/04/81 | 20/00/80 |
| G | 05/95/00 | 05/90/05 | 05/81/14 | 05/71/24 | 05/62/33 | 05/52/43 | 05/43/52 | 05/33/62 | 05/24/71 | 05/14/81 | 05/05/90 | 05/00/95 |
| H | 0/100/0 | 00/95/05 | 00/85/15 | 00/75/25 | 00/65/35 | 00/55/45 | 00/45/55 | 00/35/65 | 00/25/75 | 00/15/85 | 00/05/95 | 0/0/100 |

These (co)polymers were found to have the following molecular weights when compared to polystyrene standards. The (co)polymers were dissolved to 5.0 mg/ml in dimethylformamide (DMF) with 0.1 % trifluoroacetic acid (TFA) (DMF-0.1% TFA). Using an accelerated GPC protocol with an evaporative light scattering detector (8 minutes / sample), the following polystyrene equivalent values of Mw (weight average molecular weight) were found:

| *Mw of library 1: Mw [Dalton x 1000]* | | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| A | 10 | 20 | 74 | 76 | 75 | 8 | 73 | 91 | 100 | 113 | 90 | 71 |
| B | 16 | 36 | 96 | 100 | 98 | 96 | 117 | 112 | 124 | 132 | 113 | 109 |
| C | 19 | 52 | 108 | 119 | 115 | 118 | 131 | 128 | 137 | 140 | 127 | 123 |
| D | 24 | 66 | 122 | 126 | 131 | 128 | 140 | 143 | 146 | 148 | 139 | 135 |
| E | 27 | 76 | 120 | 136 | 135 | 141 | 148 | 144 | 149 | 155 | 146 | 143 |
| F | 28 | 82 | 122 | 113 | 154 | 153 | 164 | 153 | 163 | 162 | 158 | 154 |
| G | 33 | 87 | 52 | 58 | 216 | 203 | 188 | 181 | 173 | 164 | 172 | 169 |
| H | 50 | 154 | 311 | 403 | 434 | 334 | 255 | 221 | 203 | 195 | 196 | 182 |

Composition and conversion were checked using ¹H-NMR. Spot checks of composition were performed across the library. The following residual monomer was found (wt% monomer/wt% total polymer x 100):

| *Conversion of library 1: residual monomer (S*/*AA*/*DMAEM [wt%]) - spot checked by* ^{*1*}*H-NMR* | | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| A | | | | | | 00/00/00 | | | | | | |
| B | | | | | | | 00/07 /01 | | | | | |
| C | | | | | | | | | | | | |
| D | 00/06/00 | | | | | | | | | | | 00/00/01 |
| E | | | | | 00/12/01 | | | 00/07/01 | | | | |
| F | | | | | | | | | | | | |
| G | | | | | | | | | | | | |
| H | 00/02/00 | | | | | 00/--/00 | | | | | | 00/00/01 |

Library 2 is another (co)polymer dispersing agent (nanodispersant) embodiment and is a (co)polymer library comprising the full ternary compositional space of styrene (S) / acrylic acid (AA) / 4-vinyl pyridine (4-VP). It was designed to have the following compositional makeup:

| *Library 2: composition (S*/*AA*/*4-VP [mol% of feed])* | | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| A | 95/05/00 | 90/09/01 | 70/26/04 | 80/15/05 | 85/10/05 | 100/0/0 | 90/05/05 | 85/05/10 | 80/05/15 | 70/05/25 | 90/00/10 | 95/00/05 |
| B | 80/20/00 | 75/24/01 | 50/43/07 | 60/30/10 | 70/19/11 | 75/14/11 | 60/18/22 | 70/11/19 | 60/10/30 | 50/08/42 | 75/01/24 | 80/00/20 |
| C | 65/35/00 | 60/38/02 | 35/55/10 | 40/45/15 | 50/32/18 | 55/25/20 | 45/25/30 | 50/18/32 | 40/15/45 | 35/10/55 | 60/02/38 | 65/00/35 |
| D | 50/50/00 | 45/52/03 | 25/64/11 | 30/53/18 | 35/42/23 | 40/33/27 | 30/31/38 | 35/23/42 | 30/17/53 | 25/11/64 | 45/03/52 | 50/00/50 |
| E | 35/65/00 | 30/67/03 | 15/72/13 | 20/60/20 | 25/49/26 | 25/41/34 | 20/36/44 | 25/26/49 | 20/20/60 | 15/13/72 | 30/03/67 | 35/00/65 |
| F | 20/80/00 | 15/81/04 | 10/77/13 | 10/68/22 | 15/55/30 | 15/47/38 | 10/40/50 | 15/30/55 | 10/22/68 | 10/14/76 | 15/04/81 | 20/00/80 |
| G | 05/95/00 | 05/90/05 | 05/81/14 | 05/71/24 | 05/62/33 | 05/52/43 | 05/43/52 | 05/33/62 | 05/24/71 | 05/14/81 | 05/05/90 | 05/00/95 |
| H | 0/100/0 | 00/95/05 | 00/85/15 | 00/75/25 | 00/65/35 | 00/55/45 | 00/45/55 | 00/35/65 | 00/25/75 | 00/15/85 | 00/05/95 | 0/0/100 |

These (co)polymers were found to have the following molecular weights when compared to polystyrene standards. The (co)polymers were dissolved to 5.0 mg/ml in dimethylformamide (DMF) with 0.1% trifluoroacetic acid (TFA) (DMF-0.1 % TFA). Using an accelerated GPC protocol with an evaporative light scattering detector (8 minutes / sample), the following polystyrene equivalent values of Mw (weight average molecular weight) were found:

| *Mw of library 2: Mw [Dalton x 1000]* | | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| A | 10 | 17.4 | 56 | 56 | 56 | 8 | 53 | 69 | 81 | 96 | 69 | 50 |
| B | 15 | 28.5 | 65 | 74 | 74 | 74 | 91 | 87 | 101 | 111 | 94 | 90 |
| C | 19 | 38 | 74 | 81 | 84 | 90 | 101 | 100 | 104 | 107 | 105 | 102 |
| D | 23 | 47 | 75 | 85 | 86 | 93 | 99 | 104 | 107 | 113 | 114 | 111 |
| E | 26 | 55 | 70 | 78.39 | 86 | 93 | 97 | 102 | 110 | 113 | 114 | 118 |
| F | 28 | 54.8 | 65 | 71 | 80 | 87 | 91 | 99 | 103 | 110 | 112 | 116 |
| G | 32 | 43 | 57 | 68 | 71 | 78 | 86 | 96 | 106 | 112 | 116 | 120 |
| H | 35 | 40 | 45 | 57 | 64 | 69 | 81 | 92 | x¹⁾ | x | x | x |

| | | | | | | | | | | | | |
|---|---|---|---|---|---|---|---|---|---|---|---|---|
| ¹⁾ no data | | | | | | | | | | | | |

Composition and conversion were checked using ¹H-NMR. Spot checks of composition were performed across the library. The following residual monomer was found (wt% monomer/wt% total polymer x 100):

| *Conversion of library 2: residual monomer (S* /*AA*/*4-VP [wt%]) - spot checked by*^{*1*}*H-NMR* | | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| A | | | | | | 00/00 /00 | | | | | | |
| B | | | | | | | 00/05 /01 | | | | | |
| C | | | | | | | | | | | | |
| D | 00/06 /00 | | | | | | | | | | | 00/00 /01 |
| E | | | | | 00/04 /00 | | | 00/06 /01 | | | | |
| F | | | | | | | | | | | | |
| G | | | | | | | | | | | | |
| H | 00/02 /00 | | | | | 00/16 /00 | | | | | | 00/00 /01 |

### (Co)polymer synthesis

In the preferred synthesis embodiment, (co)polymer synthesis was carried out under argon environment in 1 ml glass vials. A reaction block of 96 vials was loaded robotically at room temperature with monomer, solvent, and initiator:

| | |
|---|---|
| Total volume of reaction solution | 700 µl |
| Amount of monomer added | 10% by weight |
| Solvent used | dimethylformamide (DMF) |
| Initiator used and amount added | azobisisobutyronitrile (ALBN), 2.0 mol% to total monomer |

After loading, the reaction block was sealed and heated to 60 to 80°C, preferably to 70°C under stirring with magnetic stirring bars. In an alternative embodiment, a parallel condensing mantle is placed over the top of the reactor block so that the reactions can be run at ambient pressure. The reaction was run for 4 to 8 hours, preferably 6 hours before it was allowed to cool to ambient temperature.

### 2. Dispersion formulations and formulation process

Dispersions of a dye substrate of the formula I (Palanil© Brilliantrot BEL) were formed by dispersing a preformed solid solution of the (co)polymers (nanodispersants) and the dye substrate of the formula I (active ingredient).

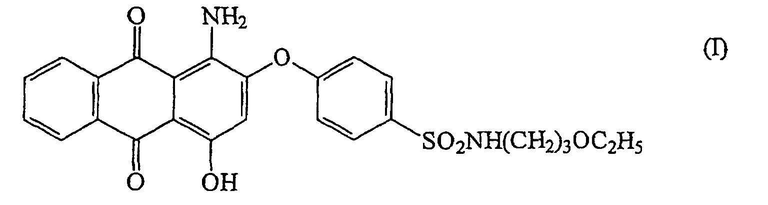

### Formation of the solid solution

Typically solid solutions are formed in a spray drying process. In the process embodiment disclosed in the examples of the present invention arrays of parallel solid solutions were formed by drying solutions of the (co)polymer (nanodispersant) and the dye substrate (active ingredient) in glass vials to form thin films of intimately mixed solid solutions of (co)polymer (nanodispersant) and dye substrate (active ingredient). The preferred process to form solid solutions comprises making a stock solution of both the (co)polymer and the dye substrate in DMF for each dye : (co)polymer ratio of interest. The stock solutions were agitated for 5 minutes using a bench-top ultrasonic mixer and appropriate amounts of each solution were dispensed into glass vials in order to provide the desired amounts of total solids for a 500 µl dispersion of each formulation. Plates of vials were then placed in a parallel spin-vac dryer. They were dried for 2 to 14 hours, preferably for 8 hours at 1.0 torr with mild heating (40°C for the first 15 minutes). After drying, vials were left with a film of intimately mixed (co)polymer and the dye substrate of the formula I (Palanil© Brilliantrot BEL).

The application media was added to each well of the array of solid solutions, and thus a formulation was created from each array element. In addition, the residual monomer was mesured for only selected wells because NMR was used. In the following certain, representative formulations are described.

| *Stable nanoparticular dispersion formulations* | |
|---|---|
| *Formulation 1:* | |
| (Co)polymer | Library 1, well C5 (S/AA/DMAEM = 50/32/18 mol%) |
| Residual monomer by ¹H-NMR | 00/12/02 (S/AA/DMAEM wt%) |
| Aqueous system | 500 µl buffered solution of pH = 9 (boric acid 0.05 M and potassium chloride 0.05 M) |
| Total solids content | 0.1 wt% solids |
| wt dye/wt total solids | 20 wt% |

| *Formulation 2:* | |
|---|---|
| (Co)polymer | Library 1, well C8 (S/AA/DMAEM = 50/18/32 mol%) |
| Residual monomer by ¹H-NMR | 00/07/04 (S/AA/DMAEM wt%) |
| Aqueous system | 500 µl of pure water |
| Total solids content | 5.0 wt% solids |
| wt dye/wt total solids | 10 wt% |

| *Formulation 3:* | |
|---|---|
| (Co)polymer | Library 1, well D9 (S/AA/DMAEM = 30/17/53 mol%) |
| Residual monomer by ¹H-NMR | 00/04/03 (S/AA/DMAEM wt%) |
| Aqueous system | 500 µl of pure water |
| Total solids content | 5.0 wt% solids |
| wt dye/wt total solids | 10 wt% |

| *Formulation 4:* | |
|---|---|
| (Co)polymer | Library 2, well D8 (S/AA/4-VP = 35/23/42 mol%) |
| Residual monomer by ¹H-NMR | 00/06/02 (S/AA/4-VP wt%) |
| Aqueous system | 500 µl buffered solution of pH = 9 (boric acid 0.05 M and potassium chloride 0.05 M) |
| Total solids content | 0.5 wt% solids |
| wt dye/wt total solids | 30 wt% |

| *Formulation 5:* | |
|---|---|
| (Co)polymer | Library 2, well D9 (S/AA/4-VP = 30/17/53 mol%) |
| Residual monomer by ¹H-NMR | 00/07/03 (S/AA/4-VP wt%) |
| Aqueous system | 500 µl buffered solution of pH = 9 (boric acid 0.05 M and potassium chloride 0.05 M) |
| Total solids content | 0.5 wt% solids |
| wt dye/wt total solids | 40 wt% |

| *Formulation 6:* | |
|---|---|
| (Co)polymer | Library 2, well E9 (S/AA/4-VP = 20/20/60 mol%) |
| Residual monomer by ¹H-NMR | 00/07/02 (S/AA/4-VP wt%) |
| Aqueous system | 500 µl buffered solution of pH = 9 (boric acid 0.05 M and potassium chloride 0.05 M) |
| Total solids content | 0.5 wt% solids |
| wt dye/wt total solids | 40 wt% |

Many other formulations were made with using the entire composition space of the (co)polymer ternaries, buffering conditions from pH = 5 to 9 to unbuffered, solids content from 0.1 to 5.0 wt%, and substrate loading (wt dye/ wt of total solids) from 1 to 40 wt%.

### Dispersion formulation process

In a preferred embodiment of the dispersion formulation process, a parallel pipettor was used to dispense 500 µl of the appropriate aqueous solution into the vials containing the dye /(co)polymer solid solutions. Mild agitation was provided by repeatedly aspirating and dispensing fluid from the vials. Additional low energy agitation was provided using a small, bench-top ultrasonic mixer. In an alternative embodiment, additional agitation was delivered after heating the dispersions to 50°C for 20 to 60 minutes and using a parallel pipettor to repeatedly aspirate and dispense fluid from the vials.

### 3. Stability testing

Samples were screened of quantity active ingredient dispersed and average particle size of dispersed particles between 12 hours and two weeks after formation of the nanodispersion. To accelerate any aging process (Ostwald ripening, crystallization, agglomeration, flocculation, chemical attack or other destabilizing processes) samples are thermally cycled. In a preferred embodiment of the aging process, samples were heated at least two times to 50°C for 1 hour and allowed to cool to ambient temperature for 4 hours. Samples were then allowed to set undisturbed for the aging process to allow unstable particles to settle to the bottom of the vials.

### 4. Dispersion characteristics

Formulations 1 to 6 showed no visible precipitation following dispersion, nor after a thermal cycling and one day aging process. Spectrophotometer measurements of the samples show that samples drawn from the top and bottom of the vials show a large absorption maximum at a wave length of approximately λ = 550 nm and with less than 10% deviation between the measured absorption between samples drawn from the top and samples drawn from the bottom of the vial. In a preferred embodiment of the screen, samples were diluted to 0.05 wt% solids in the appropriate aqueous medium.

### 5. Average particle sizes (by Fiber Optic DLS measurements)

Average particle sizes were determined in a fiber optic dynamic light scattering apparatus. Samples were diluted to approximately 0.005 wt% solids in the appropriate carrier aqueous solution. Particle sizes and PDI (polydispersity index) values were determined by second order cumulant analysis and are reported in terms of hydrodynamic radius (r_{H}). In the following tables the particle size results and PDI values from two independently dispersed systems of each formulation are shown:

| *Hydrodynamic radius (r*_{*H*}) | | | | | | |
|---|---|---|---|---|---|---|
| r_{H} [nm] | Form.¹⁾ 1 | Form. 2 | Form. 3 | Form. 4 | Form. 5 | Form. 6 |
| Copy 1 | 41 | 44 | 46 | 41 | 24 | 20 |
| Copy 2 | 30 | 27 | -²⁾ | 50 | 25 | 20 |

| | | | | | | |
|---|---|---|---|---|---|---|
| 1) Formulation | | | | | | |
| 2) no data | | | | | | |

| *PDI value* | | | | | | |
|---|---|---|---|---|---|---|
| PDI | Form.¹⁾ 1 | Form. 2 | Form. 3 | Form. 4 | Form. 5 | Form. 6 |
| Copy 1 | 0.40 | 0.48 | 0.04 | 0.31 | 0.21 | 0.29 |
| Copy 2 | 0.16 | 0.39 | -²⁾ | 0.77 | 0.23 | 0.18 |

| | | | | | | |
|---|---|---|---|---|---|---|
| 1) Formulation | | | | | | |
| 2) no data | | | | | | |

## Claims

1. A method of making an array of n nanoparticular dispersion formulations, wherein said nanoparticular dispersion formulations each comprise the following components
- at least one nanodispersant,
- at least one application media
- an active ingredient
said method comprising the following steps
c) making said array of n nanoparticular dispersion formulations by
c1) a parallelized solid solution route, or
c2) a parallelized general precipitation route, or
c3) a parallelized reactive precipitation route,
d) parallelized, rapid serial or semi-parallel characterizing of said obtained n nanoparticular dispersion formulations,
wherein said active ingredient is the same in each of said n nanoparticular dispersion formulations; and
wherein n is at least 2 and wherein at least one parameter selected from the group consisting of components employed, concentration of the components, temperature, reaction time, pH-value, and solvent, if employed, is different in each of said nanoparticular dispersion formulations.

2. The method as claimed in claim 1, said method further comprising the following step prior to step c)
a) a method of making an array of m nanodipersants by a parallel polymerization process of at least 2 monomers A and B,
wherein m is independent of n at least 2.

3. The method as claimed in claim 1, said method further comprising the following steps prior to step c)
a) a method of making an array of m nanodipersants by a parallel polymerization process of at least 2 monomers A and B, and
b) characterizing said nanodipersants,
wherein m is independent of n at least 2.

4. The method of claim 1 wherein said application media is an aqueous system.

5. The method as claimed in claim 2 wherein said polymerization process in step a) is a polymerization reaction in solvent or in bulk preferably selected from the group consisting of radical polymerization, cationic polymerization, anionic polymerization, polycondensation, polyaddition, polymer analogous reactions, living radical polymerization, homogeneously catalyzed reactions, ring opening polymerizations.

6. The method of claim 2 wherein said method of making an array of m nanodipersants by a parallel polymerization process in step a) is carried out in solvent and comprises the steps
a1) delivering said at least 2 monomers A and B, at least one solvent and optionally other components appropriate for the employed polymerization process to each synthesis region on a substrate having k physically separate synthesis regions for m different nanodispersants,
a2) subsequently or concurrently reacting said monomers and optionally other useful components to form m different nanodispersants,
a3) optionally delivering said other components deferred to each synthesis region,
wherein at least one parameter selected from the group consisting of monomers or other components appropriate for the employed polymerization process, concentration of said monomers or said other components, solvent employed, temperature, and reaction time, is different in each of said m nanodispersants and k is independent of m at least 2, with the proviso that k ≥ m.

7. The method of claim 6 wherein said physically separate synthesis regions on said substrate are wells on a microtiterplate reactor or vials of a parallel reactor.

8. The method of claim 6 wherein said at least 2 monomers A and B, said solvent and optionally said other components appropriate for the employed polymerization process are delivered to said synthesis regions on said substrate from a pipette by automated and/or parallel delivering.

9. The method of claim 3 wherein said nanodispersants are **characterized in** step b) by rapid gel permeation chromatography (GPC).

10. The method of claim 1 wherein the parallelized solid solution route of step c1) comprises the following steps
c11) delivering at least one of said nanodipersants and an active ingredient to each synthesis region on a substrate having n physically separate synthesis regions;
c12) forming n solid solutions of said at least one nanodipersant and said active ingredient,
c13) dispensing said at least one application media into said k physically separate synthesis regions on said substrate,
wherein k is independent of n at least 2, with the proviso that k ≥ n.

11. The method of claim 10 wherein said physically separate synthesis regions on said substrate are wells on a microtiterplate reactor or vials of a parallel reactor.

12. The method as claimed in claim 10 wherein said solid solutions are formed by spray drying, vacuum drying or lyophilization or other drying techniques, for example by circulating warm dry air across the samples at ambient pressure.

13. The method of claim 10 wherein said at least one nanodipersant and said active ingredient are delivered to said synthesis regions on said substrate from a pipette by automated and/or parallel delivering.

14. The method of claim 1 wherein the parallelized general precipitation route of step c2) comprises the following step
c21) delivering a first solution of at least one of said application media and a second solution of said active ingredient with said first and/or second solution additionally comprising said at least one nanodispersant, to each synthesis region on a substrate having k physically separate synthesis regions,
wherein the solvents of said solutions are miscible and chosen in a way that for the resulting mixture of said solvents the saturation concentration of said active ingredient will be exceeded to form n different nanoparticular dispersion formulations and wherein k is independent of n at least 2 with the proviso that k ≥ n.

15. The method of claim 14 wherein said physically separate synthesis regions on said substrate are wells on a microtiterplate reactor or vials of a parallel reactor.

16. The method of claim 14 wherein said at least one nanodipersant and said active ingredient are delivered to said synthesis regions on said substrate from a pipette by automated and/or parallel delivering.

17. The method of claim 1 wherein the parallelized reactive precipitation route of step c3) comprises the following steps
c31) delivering a solution of one or more reactive precursor of said active ingredient and a solution of said at least one nanodispersant to each synthesis region on a substrate having k physically separate synthesis regions,
c32) reacting said one or more precursor to produce said active ingredient which is stabilized by said at least one nanodispersant to form n different nanoparticular dispersion formulations.

18. The method of claim 17 wherein said physically separate synthesis regions on said substrate are wells on a microtiterplate reactor or vials of a parallel reactor.

19. The method of claim 17 wherein said at least one nanodipersant and said active ingredient are delivered to said synthesis regions on said substrate from a pipette by automated and/or parallel delivering.

20. The method of claim 1 wherein the parallelized characterizing of said obtained n nanoparticular dispersion formulations (step d) is an optical method selected from the group consisting of visual inspection of the nanoparticular dispersion formulations, parallel measurement of optical transmission at selected wavelength and rapid parallel or serial quasielastic light scattering.

21. An array of at least 8 different nanoparticular dispersion formulations on a substrate at known locations thereon, wherein said nanoparticular dispersion formulations containing
- at least one nanodispersant,
- at least one application media, and
- an active ingredient,
wherein said active ingredient is the same in each of said nanoparticular dispersion formulations.

22. The array of claim 21 wherein said application media is an aqueous system.

23. The array of claim 21 wherein the average particle size, reported in terms of hydrodynamic radius, of the dispersed particles in said dispersion formulations is from 10 nm to 5 µm, preferably from 10 to 500 nm and more preferably from 20 to 50 nm.

24. A method of making an array of m nanodipersants by a parallel polymerization process comprising the steps
• delivering at least 2 monomers A and B, optionally a solvent and optionally other useful components appropriate for the employed polymerization process to each synthesis region on a substrate having k physically separate synthesis regions for m different nanodispersants,
• subsequently or simultaneously reacting said monomers and other useful components to form m different nanodispersants,
wherein at least one parameter selected from the group consisting of monomers or other useful components employed, concentration of said monomers or said other useful components, solvent employed, temperature, reaction time is different in each of said m nanodispersants and wherein k and m are independent of of each other at least 2 with the proviso that k ≥ m.

25. An array of at least 8 different nanodispersants on a substrate at known locations thereon, wherein said nanodispersants are synthesized by radical polymerization of at least 2 monomers A and B, wherein one of said monomers is a hydrophilic monomer and the other monomer is a hydrophobic monomer and the monomers are selected from the group consisting of non-polar monomers selected from 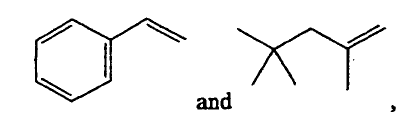 polar monomers comprising acidic groups selected from 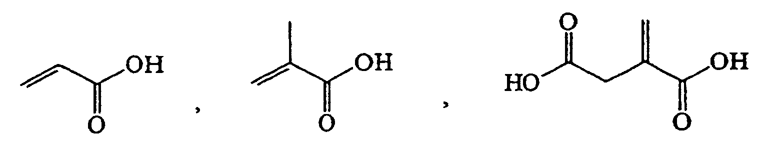 and 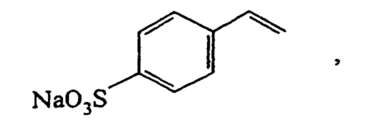 polar monomers comprising neutral groups selected from 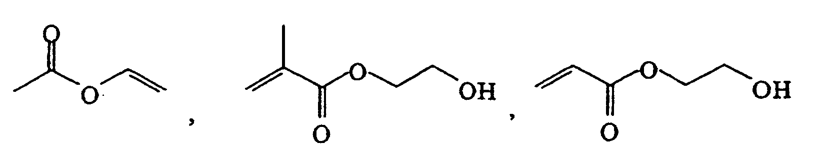 and 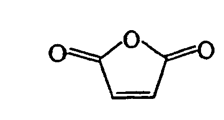 and polar monomers comprising basic groups selected from 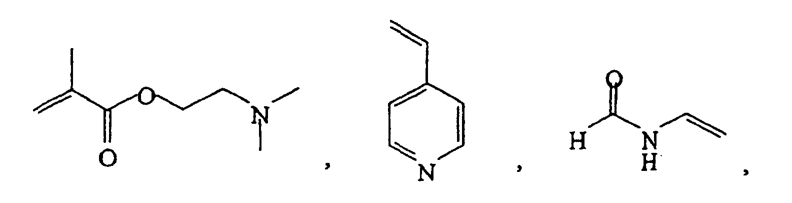 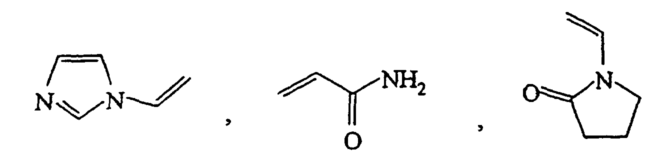 and

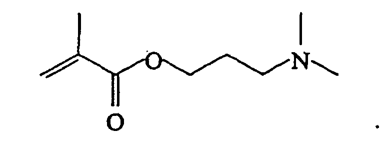

26. A method of making an array of n solid solutions by a parallelized solid solution route comprising the following steps
• delivering at least one said nanodipersant and a solution of an active ingredient to each synthesis region on a substrate having k physically separate synthesis regions;
• forming n solid solutions of said nanodipersant and said active ingredient,
wherein said active ingredient is the same in each of said n solid solutions; and
wherein k and n are independent of of each other at least 2 with the proviso that k ≥ n.

27. The method as claimed in claim 26 wherein said solid solutions are formed by spray drying, vacuum drying or lyophilization or other drying techniques, for example by circulating warm dry air across the samples at ambient pressure.

28. An array of at least 8 different solid solutions on a substrate at known locations thereon, wherein said solid solutions comprising the following components
- at least one nanodispersant, and
- an active ingredient;
wherein said active ingredient is the same in each of said solid solutions.

29. A process for the production of 100 to 100,000, preferably more than 1000 to 100,000, more preferably 10,000 to 100,000 nanoparticular dispersion formulations a day, each comprising the following components
- at least one nanodispersant,
- at least one application media
- an active ingredient;
wherein said active ingredient is the same in each of said nanoparticular dispersion formulations.

30. A process for the production of 100 to 100,000, preferably more than 1000 to 100,000, more preferably 10,000 to 100,000 nanodispersants a day, by a parallel polymerization process of at least 2 monomers A and B.

## Patentansprüche

1. Verfahren zur Herstellung eines Arrays von n nanopartikulären Dispersionen,
worin die nanopartikulären Dispersionen jeweils die folgenden Komponenten aufweisen
- mindestens ein Nanodispergiermittel,
- mindestens ein Appliziermedium,
- einen Wirkstoff
wobei das Verfahren die folgenden Schritte umfasst
c) Herstellung eines Arrays von n nanopartikulären Dispersionen durch
c1) einen parallelisierten Weg über eine feste Lösung, oder
c2) einen parallelisierten Weg über eine allgemeine Ausfällung, oder
c3) einen parallelisierten Weg über eine reaktive Ausfällung,
d) parallelisierte, schnelle serielle oder halb-parallele Charakterisierung der erhaltenen n nanopartikulären Dispersionen,
worin der Wirkstoff in jeder der n nanopartikulären Dispersionen der gleiche ist; und
worin n mindestens 2 ist und worin mindestens ein Parameter ausgewählt aus der Gruppe bestehend aus den eingesetzten Komponenten, Konzentrationen der eingesetzten Komponenten, Temperatur, Reaktionsdauer, pH-Wert und Lösungsmittel, falls ein Lösungsmittel eingesetzt wird, in jeder der nanopartikulären Dispersionen verschieden ist.

2. Verfahren nach Anspruch 1, enthaltend zusätzlich den folgenden Schritt vor Schritt c)
a) ein Verfahren zur Herstellung eines Arrays von m Nanodispergiermitteln durch parallele Polymerisation von mindestens zwei Monomeren A und B,
worin m unabhängig von n mindestens 2 ist.

3. Verfahren nach Anspruch 1, enthaltend zusätzlich die folgenden Schritte vor Schritt c)
a) ein Verfahren zur Herstellung eines Arrays von m Nanodispergiermitteln durch parallele Polymerisation von mindestens zwei Monomeren A und B, und
b) Charakterisierung der Nanodispergiermittel,
worin m unabhängig von n mindestens 2 ist.

4. Verfahren nach Anspruch 1, worin das Appliziermedium ein wässriges System ist.

5. Verfahren nach Anspruch 2, worin das Polymerisationsverfahren in Schritt a) eine Polymerisationsreaktion in Lösung oder in Substanz ist, bevorzugt ausgewählt aus der Gruppe bestehend aus radikalischer Polymerisation, kationischer Polymerisation, anionischer Polymerisation, Polykondensation, Polyaddition, polymeranalogen Reaktionen, lebender radikalischer Polymerisation, homogen katalysierten Reaktionen, Ringöffnungspolymerisationen.

6. Verfahren nach Anspruch 2, worin das Verfahren zur Herstellung eines Arrays von m Nanodispergiermitteln durch ein paralleles Polymerisationsverfahren in Schritt a) in einem Lösungsmittel durchgeführt wird und die folgenden Schritte umfasst
a1) Befördern der mindestens zwei Monomeren A und B, des mindestens einen Lösungsmittels und gegebenenfalls weiterer Komponenten, die für das eingesetzte Polymerisationsverfahren geeignet sind, zu jeder Syntheseregion auf einem Substrat, das k physikalisch getrennte Syntheseregionen für m verschiedene Nanodispersionsmittel aufweist,
a2) aufeinander folgende oder gleichzeitige Reaktion der Monomere und gegabenenfalls weiterer geeigneter Komponenten zur Ausbildung von m verschiedenen Nanodispersionen,
a3) gegebenenfalls verzögertes Befördern der weiteren Komponenten zu jeder Syntheseregion,
worin mindestens ein Parameter ausgewählt aus der Gruppe bestehend aus Monomeren oder weiteren Komponenten, die für das eingesetzte Polymerisationsverfahren geeignet sind, Konzentration der Monomere oder der weiteren Komponenten, eingesetztem Lösungsmittel, Temperatur und Reaktionsdauer in jedem der m Nanodispergiermittel verschieden ist und k unabhängig von m mindestens 2 ist, mit der Maßgabe, dass k ≥ m ist.

7. Verfahren nach Anspruch 6, worin die physikalisch getrennten Syntheseregionen auf dem Substrat Vertiefungen auf einem Microtiterplattenreaktor oder Gefäße eines parallelen Reaktors sind.

8. Verfahren nach Anspruch 6, worin die mindestens zwei Monomere A und B, das Lösungsmittel und gegebenenfalls die weiteren Komponenten, die für das eingesetzte Polymerisationsverfahren geeignet sind, mittels einer Pipette durch automatisches und/oder paralleles Befördern zu der Syntheseregion auf dem Substrat befördert werden.

9. Verfahren nach Anspruch 3, worin die Nanodispergiermittel in Schritt b) durch schnelle Gelpermeationschromatographie (GPC) charakterisiert werden.

10. Verfahren nach Anspruch 1, worin der parallelisierte Weg über eine feste Lösung in Schritt c1) die folgenden Schritte umfasst
c11) Befördern von mindestens einem Nanodispergiermittel und einem Wirkstoff zu jeder Syntheseregion auf einem Substrat, das n physikalisch getrennte Syntheseregionen aufweist;
c12) Ausbildung von n festen Lösungen des mindestens einen Nanodispergiermittels und des Wirkstoffs,
c13) Verteilen des mindestens einen Appliziermediums in die k physikalisch getrennten Syntheseregionen auf dem Substrat,
worin k unabhängig von n mindestens 2 ist, mit der Maßgabe, dass k≥ n ist.

11. Verfahren nach Anspruch 10, worin die physikalisch getrennten Syntheseregionen auf dem Substrat Vertiefungen auf einem Microtiterplattenreaktor oder Gefäβe eines parallelen Reaktors sind.

12. Verfahren nach Anspruch 10, worin die festen Lösungen durch Sprühtrocknen, Vakuumtrocknen oder Gefriertrocknen oder andere Trocknungsmethoden, zum Beispiel durch Zirkulieren von warmer trockener Luft über die Proben bei Normaldruck gebildet werden.

13. Verfahren nach Anspruch 10, worin das mindestens eine Nanodispergiermittel und der Wirkstoff mittels einer Pipette durch automatisches und/oder paralleles Befördern zu der Syntheseregion auf dem Substrat befördert werden.

14. Verfahren nach Anspruch 1, worin der parallelisierte Weg über eine allgemeine Ausfällung in Schritt c2) den folgenden Schritt umfasst
c21) Befördern einer ersten Lösung mindestens eines Appliziermediums und einer zweiten Lösung des Wirkstoffs, wobei die erste und/oder zweite Lösung zusätzlich das mindestens eine Nanodispergiermittel enthält, zu jeder Syntheseregion auf einem Substrat mit k physikalisch getrennten Syntheseregionen,
worin die Lösungsmittel der Lösungen mischbar sind und so ausgewählt sind, dass die Sättigungskonzentration des Wirkstoffs in der erhaltenen Mischung der Lösungsmittel überschritten wird, unter Ausbildung von n verschiedenen nanopartikulären Dispersionen, und worin k unabhängig von n mindestens 2 ist mit der Maßgabe, dass k ≥ n ist.

15. Verfahren nach Anspruch 14, worin die physikalisch getrennten Syntheseregionen auf dem Substrat Vertiefungen auf einem Microtiterplattenreaktor oder Gefäβe eines parallelen Reaktors sind.

16. Verfahren nach Anspruch 14, worin das mindestens Nanodispergiermittel und der Wirkstoff mittels einer Pipette durch automatisiertes und/oder paralleles Befördern zu den Syntheseregionen auf dem Substrat befördert werden.

17. Verfahren nach Anspruch 1, worin der parallelisierte Weg über eine reaktive Fällung in Schritt c3) die folgenden Schritte umfasst
c31) Befördern einer Lösung eines oder mehrerer reaktiver Precursor des Wirkstoffs und einer Lösung mindestens eines Nanodispergiermittels zu jeder Syntheseregion auf einem Substrat mit k physikalisch getrennten Syntheseregionen,
c32) Reaktion des einen oder der mehreren Precursor zur Herstellung des Wirkstoffs, der durch das mindestens eine Nanodispergiermittel stabilisiert wird, unter Ausbildung von n verschiedenen nanopartikulären Dispersionen.

18. Verfahren nach Anspruch 17, worin die physikalisch getrennten Syntheseregionen auf dem Substrat Vertiefungen auf einem Microtiterplattenreaktor oder Gefäβe eines parallelen Reaktors sind.

19. Verfahren nach Anspruch 17, worin das mindestens eine Nanodispergiermittel und der Wirkstoff mittels einer Pipette durch automatisiertes und/oder paralleles Befördern zu der Syntheseregion auf dem Substrat befördert werden.

20. Verfahren nach Anspruch 1, worin die parallelisierte Charakterisierung der erhaltenen n nanopartikulären Dispersionen (Schritt d) ein optisches Verfahren ist, ausgewählt aus der Gruppe bestehend aus visueller Prüfung der nanopartikulären Dispersionen, paralleler Messung der optischen Transmission bei ausgewählten Wellenlängen und schneller paralleler oder serieller quasielastischer Lichtstreuung.

21. Array aus mindestens 8 verschiedenen nanopartikulären Dispersionen auf einem Substrat an bekannten Positionen darauf, worin die nanopartikulären Dispersionen enthalten
- mindestens ein Nanodispergiermittel,
- mindestens ein Appliziermedium, und
- einen Wirkstoff,
worin der Wirkstoff in jeder der nanopartikulären Dispersionen der gleiche ist.

22. Array nach Anspruch 21, worin das Appliziermedium ein wässriges System ist.

23. Array nach Anspruch 21, worin die mittlere Teilchengröße der dispergierten Partikel in den Dispersionen 12 nm bis 5 µm, bevorzugt 10 bis 500 nm und besonders bevorzugt 20 bis 500 nm, angegeben als hydrodynamischer Radius, beträgt.

24. Verfahren zur Herstellung eines Arrays aus m Nanodispergiermitteln durch ein paralleles Polymerisationsverfahren umfassend die Schritte
- Befördern von mindestens zwei Monomeren A und B, gegebenenfalls einem Lösungsmittel und gegebenenfalls weiteren für das eingesetzte Polymerisationsverfahren geeigneten Komponenten zu jeder Syntheseregion auf einem Substrat mit k physikalisch getrennten Syntheseregionen für m verschiedene Nanodispergiermittel,
- aufeinander folgende oder gleichzeitige Reaktion der Monomere und der weiteren geeigneten Komponenten unter Ausbildung von m verschiedenen Nanodispergiermitteln,
worin mindestens ein Parameter ausgewählt aus der Gruppe bestehend aus Monomeren oder weiteren eingesetzten geeigneten Komponenten, Konzentration der Monomere oder der weiteren geeigneten Komponenten, eingesetztem Lösungsmittel, Temperatur, Reaktionszeit in jedem der m Nanodispergiermittel verschieden ist, und worin k und m unabhängig voneinander mindestens 2 sind, mit der Maßgabe, dass k ≥ m ist.

25. Array aus mindestens 8 verschiedenen Nanodispergiermitteln auf einem Substrat an bekannten Positionen darauf, worin die Nanodispergiermittel durch radikalische Polymerisation von mindestens zwei Monomeren A und B hergestellt werden, worin eines der Monomere ein hydrophiles Monomer ist und das andere Monomer ein hydrophobes Monomer ist, und die Monomere ausgewählt sind aus der Gruppe bestehend aus nicht-polaren Monomeren ausgewählt aus 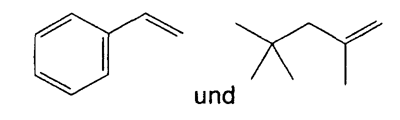 polaren Monomeren enthaltend saure Gruppen ausgewählt aus 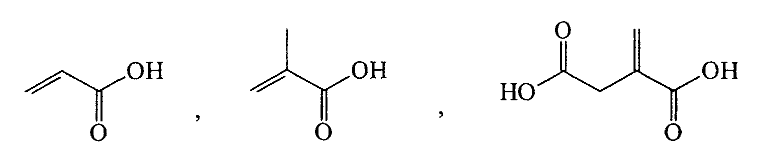 und 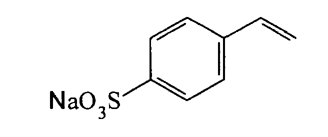 polaren Monomeren enthaltend neutrale Gruppen ausgewählt aus 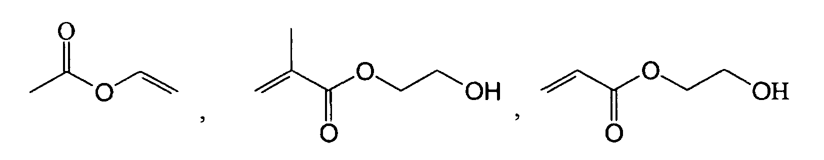 und 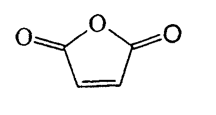 und polaren Monomeren enthaltend basische Gruppen ausgewählt aus 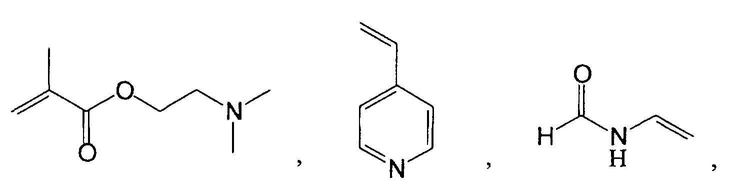 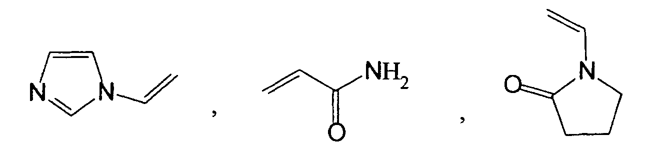 und

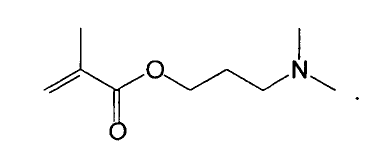

26. Verfahren zur Herstellung eines Arrays von n festen Lösungen durch einen parallelisierten Weg über feste Lösungen umfassend die folgenden Schritte
- Befördern mindestens eines Nanodispergiermittels und einer Lösung eines Wirkstoffs zu jeder Syntheseregion auf einem Substrat mit k physikalisch getrennten Syntheseregionen;
- Ausbildung von n festen Lösungen des Nanodispergiermittels und des Wirkstoffs,
worin der Wirkstoff in jeder der n festen Lösungen der gleiche ist; und worin k und n unabhängig voneinander mindestens 2 sind, mit der Maßgabe, dass k ≥ n ist.

27. Verfahren nach Anspruch 26, worin die festen Lösungen durch Sprühtrocknung, Vakuumtrocknung oder Gefriertrocknung oder andere Trocknungsmethoden, zum Beispiel durch Zirkulation von warmer trockener Luft über die Proben bei Normaldruck, gebildet werden.

28. Array aus mindestens 8 verschiedenen festen Lösungen auf einem Substrat auf bekannten Positionen darauf, worin die festen Lösungen die folgenden Komponenten umfassen
- mindestens ein Nanodispergiermittel, und
- einen Wirkstoff;
worin der Wirkstoff in jeder der festen Lösungen der gleiche ist.

29. Verfahren zur Herstellung von 100 bis 100.000, bevorzugt über 1.000 bis 100.000, besonders bevorzugt 10.000 bis 100.000 nanopartikulären Dispersionen am Tag, wobei jede nanopartikuläre Dispersion die folgenden Komponenten umfasst
- mindestens ein Nanodispergiermittel,
- mindestens ein Appliziermedium
- mindestens einen Wirkstoff;
worin der Wirkstoff in jeder der nanopartikulären Dispersionen der gleiche ist.

30. Verfahren zur Herstellung von 100 bis 100.000, bevorzugt mehr als 1.000 bis 100.000, besonders bevorzugt 10.000 bis 100.000 Nanodispergiermitteln am Tag, durch ein paralleles Polymerisationsverfahren von mindestens zwei Monomeren A und B.

## Revendications

1. Procédé pour préparer une collection de n compositions de dispersions de nanoparticules, chacune de ces compositions de dispersions de nanoparticules contenant les composants suivants:
- au moins un nanodispersant,
- au moins un milieu d'application,
- une substance active,
le procédé comprenant les étapes opératoires suivantes :
c) on forme cette collection de compositions de dispersions de nanoparticules par
c1) une voie en solution solide parallélisée, ou
c2) une voie par précipitation générale parallélisée, ou bien
c3) une voie par précipitation réactive parallélisée,
d) on procède à la caractérisation parallélisée, en série rapide ou semi-parallèle des n compositions de dispersions de nanoparticules ainsi obtenues, la substance active étant la même dans chacune des n compositions de dispersions de nanoparticules ; et
n est égal au moins à 2, et au moins un facteur choisi dans le groupe consistant en la nature des composants utilisés, la concentration des composants, la température, la durée de réaction, le pH et la nature du solvant éventuel, est différent dans chacune de ces compositions de dispersions de nanoparticules.

2. Procédé selon la revendication 1, comprenant en outre l'étape suivante, précédant l'étape c)
a) un procédé pour former une collection de m nanodispersants par une opération de polymérisation parallèle d'au moins deux monomères A et B,
m, indépendant de n, étant au moins égal à 2.

3. Procédé selon la revendication 1, comprenant en outre les étapes suivantes, précédant l'étape c)
a) un procédé pour former une collection de m nanodispersants par une opération de polymérisation parallèle d'au moins deux monomères A et B et
b) la caractérisation de ces nanodispersants,
m, indépendant de n, étant au moins égal à 2.

4. Procédé selon la revendication 1, dans lequel ledit milieu d'application est un milieu aqueux.

5. Procédé selon la revendication 2, dans lequel l'opération de polymérisation de l'étape a) consiste en une réaction de polymérisation dans un solvant ou en masse, de préférence un procédé de polymérisation choisi dans le groupe consistant en la polymérisation radicalaire, la polymérisation cationique, la polymérisation anionique, la polycondensation, la polyaddition, des réactions analogues de polymères, la polymérisation par radicaux vivants, des réactions à catalyse homogène, des polymérisations avec ouverture de cycle.

6. Procédé selon la revendication 2, dans lequel le procédé pour former une collection de m nanodispersants par une opération de polymérisation parallèle de l'étape a) est réalisée dans un solvant et comprend les étapes suivantes :
a1) l'envoi d'au moins deux des monomères A et B, d'au moins un solvant et de façon optionnelle d'autres composants convenant pour le procédé de polymérisation utilisé dans chacune des régions de synthèse sur un substrat contenant k régions de synthèse séparées pour m nanodispersants différents,
a2) la réaction subséquente ou concurrente de ces monomères et de façon optionnelle des autres composants utiles pour formation de m nanodispersants différents,
a3) l'envoi optionnel desdits autres composants dans chacune des régions de synthèse,
au moins un facteur, choisi dans le groupe consistant en la nature des monomères ou des autres composants convenant pour le procédé de polymérisation exploité, la concentration de ces monomères ou de ces autres composants, la nature du solvant utilisé, la température et la durée de réaction, étant différent pour chacun des m nanodispersants, et k, indépendant de m, est égal au moins à 2, avec la condition que k est supérieur ou égal à m.

7. Procédé selon la revendication 6, dans lequel les régions de synthèse physiquement séparées dudit substrat sont des sources d'un réacteur à plaque de microtitrage ou des fioles d'un réacteur parallèle.

8. Procédé selon la revendication 6, dans lequel lesdits au moins deux monomères A et B, le solvant et les autres composants éventuels convenant pour le procédé de polymérisation exploité sont envoyés dans lesdites régions de synthèse du substrat à partir d'une pipette par dosage automatique et/ou parallèle.

9. Procédé selon la revendication 3, dans lequel les nanodispersants sont caractérisés au stade b) par chromatographie rapide par perméabilité de gel (GPC).

10. Procédé selon la revendication 1, dans lequel la voie en solution solide parallélisée de l'étape c1) comprend les étapes suivantes :
c11) l'envoi d'au moins un desdits nanodispersants et d'une substance active dans chacune des régions de synthèse sur un substrat à n régions de synthèse physiquement séparées ;
c12) la formation de n solutions solides d'au moins un nanodispersant et de la substance active,
c13) l'envoi d'au moins un des milieux d'application dans k régions de synthèse physiquement séparées sur le substrat,
k, indépendant de n, étant au moins égal à 2, avec la condition que k est supérieur ou égal à n.

11. Procédé selon la revendication 10, dans lequel lesdites régions de synthèse physiquement séparées du substrat sont les sources d'un réacteur à plaque de microtitrage ou les fioles d'un réacteur parallèle.

12. Procédé selon la revendication 10, dans lequel les so lutions solides sont formées par séchage par atomisation, séchage sous vide ou lyophilisation ou une autre technique de séchage, par exemple par circulation d'air chaud sec sur les échantillons à pression ambiante.

13. Procédé selon la revendication 10, dans lequel on envoie au moins un nanodispersant et la substance active lesdites régions de synthèse du substrat à partir d'une pipette par dosage automatique et/ou parallèle.

14. Procédé selon la revendication 1, dans lequel la voie par précipitation générale parallélisée du stade c2) comprend l'étape suivante:
c21) l'envoi d'une première solution d'au moins un des milieux d'application et d'une seconde solution du composant actif, la première et/ou la deuxième de ces solutions contenant en outre au moins un nanodispersant, sur chacune des régions de synthèse d'un substrat contenant k régions de synthèse physiquement séparées,
les solvants de ces solutions étant miscibles et choisis en sorte que, pour leur mélange, la concentration de saturation de la substance active soit dépassée pour former n compositions différentes de dispersions de nanoparticules, k, indépendant de n, étant au moins égal à 2, avec la condition que k est supérieur ou égal à n.

15. Procédé selon la revendication 14, dans lequel les régions de synthèse physiquement séparées du substrat sont les sources d'un réacteur à plaque de microtitrage ou les fioles d'un réacteur parallèle.

16. Procédé selon la revendication 14, dans lequel au moins un des nanodispersants et la substance active sont envoyés sur les régions de synthèse du substrat à partir d'une pipette par dosage automatique et/ou parallèle.

17. Procédé selon la revendication 1, dans lequel la voie de précipitation par réaction parallélisée du stade c3) comprend les étapes suivantes :
c31) envoi d'une solution d'un ou plusieurs précurseurs réactifs de la substance active et d'une solution d'au moins un nanodispersant dans chacune des régions de synthèse d'un substrat à k régions de synthèse physiquement séparées,
c32) réaction de ce ou ces précurseurs avec formation de la substance active, laquelle est stabilisée par le nanodispersant pour former n compositions différentes de dispersions de nanoparticules.

18. Procédé selon la revendication 17, dans lequel les régions de synthèse physiquement séparées du substrat sont les sources d'un réacteur à plaque de microtitrage ou les fioles d'un réacteur parallèle.

19. Procédé selon la revendication 17, dans lequel le nanodispersant et la substance active sont envoyés sur les régions de synthèse du substrat à partir d'une pipette par dosage automatique et/ou parallèle.

20. Procédé selon la revendication 1, dans lequel la caractérisation parallélisée des n compositions de dispersions de nanoparticules ainsi obtenues (étape d) consiste en une méthode optique choisie dans le groupe consistant en l'examen visuel des compositions de dispersions de nanoparticules, une mesure parallèle des transmissions optiques à une longueur d'onde choisie et une diffraction de lumière quasi-élastique rapide parallèle ou en série.

21. Collection d'au moins huit compositions différentes de dispersions de nanoparticules sur un substrat à des endroits connus de celui-ci, ces compositions de dispersions de nanoparticules contenant
- au moins un nanodispersant,
- au moins un milieu d'application et
- une substance active,
cette substance active étant identique dans chacune des compositions de dispersions de nanoparticules.

22. Collection selon la revendication 21, dans laquelle le milieu d'application est un milieu aqueux.

23. Collection selon la revendication 21, dans laquelle la dimension de particule moyenne, exprimée en terme de rayon hydrodynamique, des particules en dispersion dans ces compositions, va de 10 nm à 5 µm, de préférence de 10 à 500 nm et plus spécialement de 20 à 50 mn.

24. Procédé pour former une collection de m nanodispersants par un procédé de polymérisation parallèle contenant les étapes suivantes :
- envoi d'au moins deux monomères A et B, de façon optionnelle d'un solvant et de façon optionnelle d'autres composés usuels convenant pour le procédé de polymérisation exploité dans chacune des régions de synthèse d'un substrat à k régions de synthèse physiquement séparées pour m nanodispersants différents,
- réaction subséquente ou simultanée de ces monomères et des autres composants usuels avec formation de m nanodispersants différents,
au moins un facteur choisi dans le groupe consistant en la nature des monomères ou des autres composants usuels, la concentration de ces monomères ou de ces autres composants, la nature du solvant utilisé, la température, la durée de réaction, étant différent dans chacun des m nanodispersants, k et m, indépendants l'un de l'autre, sont égaux au moins à 2 et k est supérieur ou égal à m.

25. Collection d'au moins huit nanodispersants différents sur un substrat à des endroits connus de celui-ci, ces nanodispersants étant préparés par polymérisation radicalaire d'au moins deux monomères A et B, dont l'un est un monomère hydrophile et l'autre un monomère hydrophobe, ces monomères étant choisis dans le groupe consistant en les monomères non polaires eux-mêmes choisis parmi 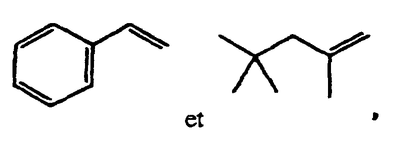 les monomères polaires portant des groupes acides choisis parmi 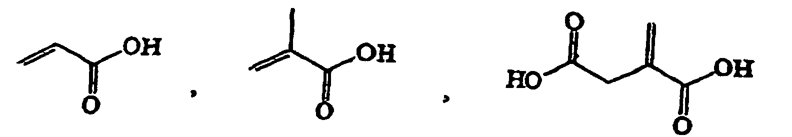 et 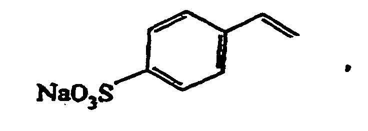 les monomères polaires contenant des groupes neutres choisis parmi 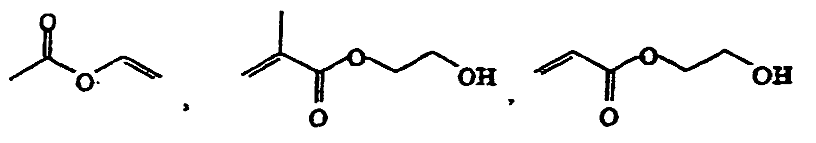 et 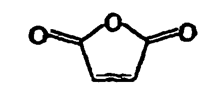 et les monomères polaires contenant des groupes basiques choisis parmi 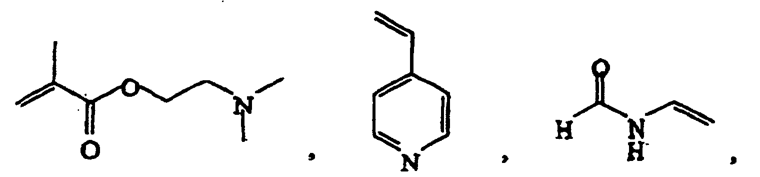 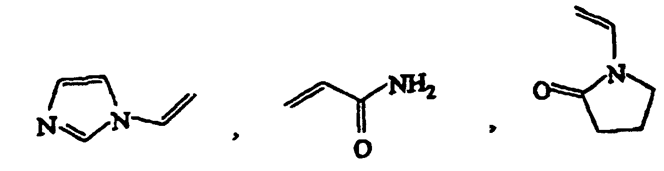 et

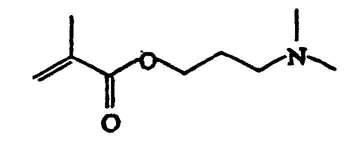

26. Procédé pour former une collection de n solutions solides par une voie en solution solide parallélisée comprenant les étapes suivantes:
- envoi d'au moins un des nanodispersants et d'une solution d'une substance active dans chacune des régions de synthèse d'un substrat contenant k régions de synthèse physiquement séparés;
- formation de n solutions solides du nanodispersant et de la substance active, cette substance active étant identique dans chacune des n solutions solides ; et k et n, indépendants l'un de l'autre, sont égaux au moins à 2 et k est supérieur ou égal à n.

27. Procédé selon la revendication 26, dans lequel les solutions solides sont formées par séchage par atomisation, séchage sous vide ou lyophilisation ou par d'autres techniques de séchage, par exemple par circulation d'air chaud sec sur les échantillons à pression ambiante.

28. Collection d'au moins huit solutions solides différentes sur un substrat à des endroits connus de celui-ci, ces solutions solides contenant les composants suivants :
- au moins un nanodispersant et
- une substance active ;
cette substance active étant identique dans chacune des solutions solides.

29. Procédé pour produire 100 à 100.000, de préférence de plus de 1000 à 100.000, dans les meilleures conditions de 10.000 à 100.000 compositions de dispersions de nanoparticules par jour, chacune de celles-ci contenant les composants suivants :
- au moins un nanodispersant,
- au moins un milieu d'application,
- une substance active, la substance active étant la même pour toutes les compositions de dispersions de nanoparticules.

30. Procédé pour la production de 100 à 100.000, de préférence de plus de 1000 à 100.000, plus spécialement de 10.000 à 100.000 nanodispersants par jour, par un procédé de polymérisation parallèle d'au moins deux monomères A et B.
